(19) Europäisches Patentamt
European Patent Office
Office européen des brevets

(11) **EP 2 864 014 B1**

(12) **EUROPEAN PATENT SPECIFICATION**

(45) Date of publication and mention
of the grant of the patent:
**11.12.2019 Bulletin 2019/50**

(51) Int Cl.:
*B01D 24/00* (2006.01)      *B28B 3/20* (2006.01)
*D04H 1/559* (2012.01)      *B29L 31/14* (2006.01)
*D04H 3/16* (2006.01)      *D01D 5/098* (2006.01)
*D04H 1/56* (2006.01)

(21) Application number: **13807086.7**

(22) Date of filing: **20.06.2013**

(86) International application number:
**PCT/US2013/046746**

(87) International publication number:
**WO 2013/192392 (27.12.2013 Gazette 2013/52)**

(54) **FINE FIBER FILTER MEDIA AND PROCESSES**

FEINFASER-FILTERMEDIEN UND VERFAHREN DAFÜR

COUCHE FILTRANTE À FIBRES FINES ET PROCÉDÉS ASSOCIÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.06.2012  US 201213528796**

(43) Date of publication of application:
**29.04.2015  Bulletin 2015/18**

(73) Proprietor: **Hollingsworth & Vose Company
East Walpole, MA 02032 (US)**

(72) Inventors:
• **COX, Stephen, T.
Radford, VA 24141 (US)**
• **FREEMAN, William, S.
Roanoke, VA 24018 (US)**
• **DOUCOURE, Abdoulaye
Roanoke, VA 24018 (US)**
• **WERTZ, John, A.
Hollis, NH 03049 (US)**

(74) Representative: **Hoffmann Eitle
Patent- und Rechtsanwälte PartmbB
Arabellastraße 30
81925 München (DE)**

(56) References cited:
WO-A1-2012/150964      US-A- 6 034 008
US-A1- 2004 135 274      US-A1- 2007 138 698
US-A1- 2010 282 682      US-A1- 2010 297 720
US-A1- 2010 323 573      US-A1- 2011 139 706
US-A1- 2011 259 813

**Description**

FIELD

Fine fiber products, including those suitable for use as filter media, as well as related assemblies, systems and methods, are described.

BACKGROUND

Filter media can be used to remove contamination in a variety of applications. Depending on the application, the filter media may be designed to have different performance characteristics. In general, filter media can be formed of a web of fibers. The fiber web provides a porous structure that permits fluid (e.g., a liquid or a gas) to flow through the filter media. Contaminant particles contained within the fluid may be trapped on the fibrous web. Filter media characteristics, such as fiber diameter and basis weight, affect filter performance including filter efficiency and resistance to fluid flow through the filter.

Fiber webs can be formed by different processes. In a meltblowing process, a fiber web may be formed by extruding a polymeric material through a die and then attenuating the resulting filaments with a heated, high-velocity air stream. This process may generate fine fibers that can be collected onto a moving collector belt where they intertwine with each other to form a fiber web. There are several parameters during the extrusion process that can affect the structural and performance characteristics of the resulting fiber webs. Improvements in the extrusion process may lead to fiber webs having improved structural and performance characteristics, such as reduced fiber diameters, increased surface area, and/or reduced basis weight. Such improvements would find use in a number of different fields where fiber webs can be used, such as in filtration applications.

WO2012150964 (A1) discloses fine fiber products including fiber webs, as well as related assemblies, systems and methods. This document describes that the fiber webs may include fine fibers. According to this document, the fiber webs may be used for filter media applications.

US2010282682 discloses fluid filtration articles, including composite nonwoven fibrous webs, and methods of making and using such articles as gas or liquid filtration elements. In this disclosure, the articles include a population of coarse microfibers having a population median diameter of at least 1 micrometer formed as a first layer, and a population of fine fibers having a population median diameter less than 10 micrometers formed as a second layer adjoining the first layer. At least one of the fiber populations may be oriented.

SUMMARY

The disclosure generally relates to fine fiber products, as well as related assemblies, systems and methods.

In some embodiments, a series of fiber webs are provided. In one set of embodiments of the present disclosure, a fiber web includes a plurality of meltblown fibers formed of a polymeric material and having an average fiber diameter between about 0.1 microns and about 1.5 microns. The fiber web has an air permeability between about 50.8 l/m$^2$/s (10 CFM) and about 9144 l/m$^2$/ (1800 CFM), a surface area between about 0.1 m$^2$/g and about 6.0 m$^2$/g, a basis weight between about 1.0 g/m$^2$ and about 100 g/m$^2$, and a thickness between about 0.00127 cm (0.0005 inches) and about 0.1016 cm (0.04 inches). The fiber web also has a surface density of particles formed of the polymeric material of less than about 0.25 particles/cm$^2$ (1.6 particles/in$^2$), wherein each of the particles has a largest cross-sectional dimension of about 1.0 mm or greater.

In the present invention, a fiber web as defined in the claims is provided which includes a fiber web comprising a plurality of meltblown fibers having an average fiber diameter between 0.1 microns and 1.5 microns. The fiber web has a mean pore size of greater than 0.1 microns and less than 2.0 micron. The fiber web has a water permeability of greater than 29 ml/min·cm$^2$·MPa (0.2 ml/min·cm$^2$·psi), and a permeate turbidity of less than 8 NTU. The fiber web also has a basis weight between 15 g/m$^2$ and 200 g/m$^2$ and a thickness between 0.00508 mm (0.002 inches) and 0.0508 mm (0.02 inches). The fiber web is formed by laminating two or more layers of the plurality of meltblown fibers and/or is formed by subjecting two or more layers of the plurality of meltblown fibers to a calendering process

In another set of embodiments of the present disclosure, a fiber web comprises a plurality of meltblown fibers having an average fiber diameter between about 0.1 microns and about 1.5 microns. The fiber web has a mean pore size of greater than about 0.1 microns and less than about 2.0 microns. The fiber web may have a ratio of bubble point to mean pore size of less than about 3:1. The fiber web may have a water permeability of greater than about 29 ml/min·cm$^2$·MPa (0.2 ml/min·cm$^2$·psi). Additionally, the fiber web may have a solidity of greater than or equal to about 10% and less than about 70%. The fiber web may have a basis weight between about 15 g/m$^2$ and about 200 g/m$^2$. The fiber web may have a thickness between about 0.00508 (0.002 inches) and about 0.0508 cm (0.02 inches).

In another set of embodiments of the present disclosure, a fiber web includes a plurality of meltblown fibers formed of a polymeric material and having an average fiber diameter between about 0.1 microns and about 0.6 microns. The fiber web has an air permeability between about 50.8 l/m$^2$/s (10 CFM) and about 9144 l/m$^2$/s (1800 CFM), a surface area between about 0.1 m$^2$/g and about 6.0 m$^2$/g, a basis weight between about 1.0 g/m$^2$ and about 100 g/m$^2$, and a thickness between about 0.00127 cm (0.0005 inches) and about 0.1016 cm (0.04 inches). The fiber web also has a surface density of particles formed of the polymeric material of less than about 0.78 particles/cm$^2$ (5 particles/in$^2$), wherein each of the particles has a largest cross-sectional dimension of about 1.0 mm or greater.

In another set of embodiments of the present disclosure, a fiber web includes a plurality of meltblown fibers having an average fiber diameter between about 0.1 microns and about 1.5 microns. The fiber web has an air permeability between about 50.8 and about 9144 l/m$^2$/s (about 10 and about 1800 CFM), a surface area greater than about 2.0 m$^2$/g, a basis weight between about 1.0 g/m$^2$ and about 100 g/m$^2$, and a thickness between about 0.00127 cm (0.0005 inches) and about 0.1016 cm (0.04 inches).

In some embodiments of the present disclosure, a series of methods of forming fiber webs is provided. In one set of embodiments, a method of forming a fiber web includes introducing a polymeric material into an extrusion system including an extruder inlet, a die outlet, and a processing space between the extruder inlet and the die outlet, wherein the extrusion system comprises a extruder barrel having an inner diameter of about 10 cm (4 inches) or less, and processing the polymeric material in the extrusion system such that the polymeric material has a dwell time of less than about 85 minutes in the processing space. The method also includes forming a plurality of meltblown fibers from the polymeric material, wherein the plurality of meltblown fibers have an average diameter between about 0.1 microns and about 1.5 microns, and forming a fiber web comprising the plurality of meltblown fibers.

In another set of embodiments of the present disclosure, a method of forming a fiber web includes introducing a polymeric material into an extrusion system including an extruder inlet, a die outlet, and a processing space between the extruder inlet and the die outlet having a volume of less than about 25,000 cm$^3$. The method also includes forming a plurality of meltblown fibers from the polymeric material, wherein the plurality of meltblown fibers have an average diameter between about 0.1 microns and about 1.5 microns, and forming a fiber web comprising the plurality of meltblown fibers.

In another set of embodiments of the present disclosure, a method of forming a fiber web includes introducing a polymeric material into an extrusion system including an extruder inlet, a die outlet, and a processing space between the extruder inlet and the die outlet, and processing the polymeric material in the extrusion system such that the polymeric material has a dwell time in the processing space of less than about 30 minutes and a throughput of less than about 38.3 kg/hr (85 lbs/hr). The method also includes forming a plurality of meltblown fibers from the polymeric material, wherein the plurality of meltblown fibers have an average diameter between about 0.1 microns and about 1.5 microns, and forming a fiber web comprising the plurality of meltblown fibers.

In another set of embodiments of the present disclosure, a method of forming a fiber web includes introducing a polymeric material into an extrusion system including an extruder inlet, a die outlet, and a processing space between the extruder inlet and the die outlet, and processing the polymeric material in the extrusion system such that the polymeric material has a dwell time in the processing space of less than about 50 minutes and a throughput of less than about 24.8 kg/hr (55 lbs/hr). The method also includes forming a plurality of meltblown fibers from the polymeric material, wherein the plurality of meltblown fibers have an average diameter between about 0.1 microns and about 1.5 microns, and forming a fiber web comprising the plurality of meltblown fibers.

Other advantages and novel features of the present invention will become apparent from the following detailed description in conjunction with the accompanying figures. In cases where the present specification and a document incorporated by reference include conflicting and/or inconsistent disclosure, the present specification shall control. If two or more documents incorporated by reference include conflicting and/or inconsistent disclosure with respect to each other, then the document having the later effective date shall control.

BRIEF DESCRIPTION OF THE FIGURES

The present invention will be described by way of example with reference to the accompanying figure, which is schematic and is not intended to be drawn to scale. In the figure, each identical or nearly identical component illustrated is typically represented by a single numeral. For purposes of clarity, not every component is labeled, nor is every component of each embodiment of the invention shown where illustration is not necessary to allow those of ordinary skill in the art to understand the invention. In the figures:

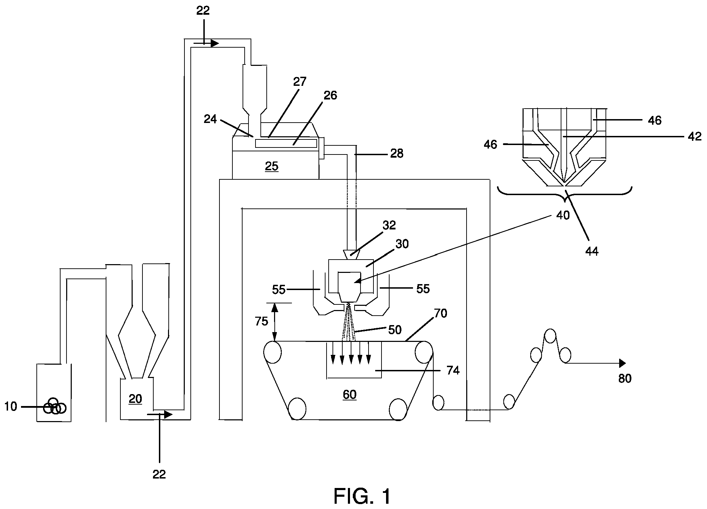

FIG. 1 is a schematic diagram showing a process for fiber formation according to one set of embodiments.

DETAILED DESCRIPTION

Fine fiber products including fiber webs, as well as related assemblies, systems and methods, are described. In some embodiments, fiber webs described herein may include fine fibers and relatively low amounts of degraded polymer formed during a fiber extrusion process. Polymer degradation may result in the formation of polymeric particles, which may lessen the properties of fiber webs used for filter media or other applications. Polymer degradation may be decreased by, for example, decreasing the amount of time (e.g., dwell time) the polymeric material spends at relatively high temperatures and pressures in certain portions of the extrusion system. Factors influencing this decreased dwell time are balanced with the desire to form fibers having small diameters which in certain conventional processes are produced at longer dwell times. In some embodiments, fiber webs described herein have a relatively low air permeability and a relatively high surface area, which can lead to increased performance. Other advantages of the articles, methods and systems described herein are also provided.

This disclosure describes several methods for addressing some problems associated with certain polymer fiber extrusion processes. One problem involves the formation of fibers having very small diameters. As described in more detail below, generally the formation of fibers having very small diameters in certain extrusion processes uses a relatively low polymer throughput. However, a low throughput may lead to the formation of degraded polymeric material in the form of particles during an extrusion process. This degradation may be caused by the polymeric material being subjected to the relatively high temperatures and pressures of the extrusion process for prolonged periods of time and/or to other conditions. As the amount of degraded polymer increases, less fiber is produced per unit of polymer. For fiber webs used for filtration or certain other applications, this occurrence is not desirable as it may result in having to form fiber webs having a higher basis weight in order to achieve the same level of performance as fiber webs without degraded polymer, all other factors being equal.

In the past, increased amounts of degraded polymer formed during an extrusion process sometimes results in the practitioner having to change certain parameters of the extrusion process to reduce the amount of degraded polymer; however, these changes may lead to the formation of fibers having relatively larger diameters and/or fiber webs having less desirable performance characteristics. The inventors have discovered within the context of the invention that by balancing certain parameters of an extrusion process and/or by including one or more additives to the polymeric material used to form the fibers, fine fiber webs having relatively low amounts of polymer degradation, increased performance, and/or better structural characteristics can be achieved. Examples of parameters that can be varied and additives that can be used to achieve this result are described in more detail below.

Although much of the description provided herein refers to a fiber web or a meltblown product used as filter media, it should be understood that the fiber web and/or meltblown product can be used in other applications in other embodiments.

FIG. 1 shows a system 1 that may be used in methods that form fine fibers according to certain embodiments described herein. As shown in this illustrative embodiment, a polymeric material 10, such as a resin which may be in granular form, may be introduced into a mixer 20, where the polymeric material can be optionally combined with one more additives. The polymeric material may then be transported in the direction of arrows 22 towards an inlet 24 of an extruder 25. The extruder includes an extruder screw 26 that is mounted for rotation within an extruder barrel 27. Through the rotation of the screw, polymeric material is conveyed downstream within the extruder barrel, which may be heated to a desired temperature to create a fluid stream of polymeric material. The polymer is heated (generally slowly) from the inlet of the extruder to the outlet of the extruder to allow the polymeric material to flow more easily. The stream of polymeric material may then flow into one or more conduits 28 fluidically connecting the extruder to a die body 30 (e.g., connecting the extruder outlet to a die body inlet). The volume between the extruder inlet and a die outlet 44 collectively define a processing space having a particular internal volume that can be used to calculate the dwell time of the polymeric material, as described in more detail below.

As shown illustratively in FIG. 1, a melt pump 32 may be positioned between conduit 28 and the die body. The melt pump can help control the amount of polymer throughput (kg/hr) (lb/hr) delivered to the die body. The die body has a die temperature which influences the temperature of the polymeric material in the die body, including the temperature of the polymer in a spin pack 40 connected to the die body. The spin pack may include one or more channels 42 allowing the polymer to flow towards a die outlet 44 (e.g., a die tip) including one or more holes. The spin pack also includes one or more additional channels 46 which can allow air or other gases to flow towards the die tip. As the melted polymer exits the one or more die outlets, the air flowing in channels 46 attenuates the polymer into fibers. Fiber formation can be controlled by modifying the process air temperature and process air volume.

The polymer exiting the one or more holes of the die outlet is formed into meltblown fibers 50 onto a collector table 60 which includes a collector belt 70. The diameter of the fibers may be controlled in part by air or other gases introduced into channels 55, which can be used to quench the fibers. The heated, high velocity air impinges the polymer on either side of the die outlet as the polymer exits out of the die outlet. This air may attenuate the fiber to the final fiber size. Quenching can be controlled by modifying the quench air temperature and quench air volume.

The fibers collected onto the collector belt may be pulled towards the collector table using a suction box 74. The fibers collected onto the collector belt form a fiber web. The distance 75 from the die tip to the collector table can be varied to control the density of the fiber web (e.g., as the distance is increased, the fiber velocity is decreased and the fiber temperature is reduced so packing of the fibers is less dense, resulting in a more lofty web). As the distance is increased, the velocity of the fiber is generally decreased, making a loftier fiber web. The collector suction is also controlled, which also impacts the loft of the fiber web. The basis weight and thickness of the fiber web can be varied by controlling the collector belt speed. The collector belt transports the fiber web to a winder 80 where the fiber web can be further processed if desired.

In certain embodiments, a method of forming a fiber web may involve controlling the dwell time of the polymeric material in a processing space of a system such as the one shown in FIG. 1. The dwell time is the time the polymeric material spends in a processing space, which includes the combined volume where the polymeric material can reside between an extruder inlet and a die outlet, within the temperature- and pressure-controlled confines of the extrusion process. The combined volume may include, for example, the volume of the extruder (e.g., extruder barrel), die body, and any conduits fluidically connecting the extruder and die body. The dwell time can be calculated using the formula:

$$\text{Dwell time} = V \cdot \rho / Th \qquad\qquad (1)$$

where V is the volume of the processing space as defined above, $\rho$ is the density of the polymeric material being extruded, and Th is the throughput of the polymeric material through the die body.

Without wishing to be bound by any theory, the inventors believe that in some embodiments, in order to form fine fiber webs, relatively low throughputs may be used during the extrusion process. Relatively low throughputs allow fibers having small diameters to be formed; however, low throughputs may also result in a certain amount of the polymeric material used to form the fibers to become degraded due to the polymeric material being subjected to the relatively high temperatures and pressures of the extrusion process for prolonged periods of time (i.e., a relatively high dwell time). Degradation may result in the formation of small polymeric particles as described in more detail below, which may lessen the filtration properties of the fiber web. If relatively high throughputs are used, the dwell time of the polymeric material decreases; however, fibers having larger diameters may be formed. As a result, in some embodiments a suitable process for forming fine fibers with low polymer degradation may involve balancing both the throughput and the dwell time of the polymeric material during the extrusion process.

The inventors have recognized within the context of the invention that one method for decreasing the dwell time of the polymeric material while obtaining small fiber diameters is to decrease the volume of the processing space. As the processing space includes the combined volume between an extruder inlet and a die outlet, the volume of the processing space may be decreased by, for example, decreasing the diameter and/or length of the extruder barrel, decreasing the number, diameter and/or length of any conduits connecting the extruder and die body, decreasing the internal volume of the die body, and combinations thereof. Using a relatively low processing space volume during an extrusion process can allow, in some embodiments, a relatively low polymer throughput to be used, while still maintaining a relatively low dwell time. As such, fine fiber webs having relatively low polymer degradation may be formed.

The inventors have also observed within the context of the invention that in some embodiments, the temperature of the polymeric material in the processing space may have relatively little effect on the amount of polymer degradation, e.g., compared to the dwell time. One of ordinary skill in the art would have expected that polymer degradation was caused by the polymeric material being subjected to the relatively high temperatures (and pressures) during the extrusion process. Accordingly, to decrease the amount of polymer degradation, one of ordinary skill in the art would likely decrease the temperature of the polymeric material in the extruder and/or die body. One of ordinary skill in the art would not have expected that low amounts of polymer degradation can be achieved while using relatively high processing temperatures in combination with modifying other parameters as described in certain methods provided herein.

As noted above, in some embodiments, a method of forming a fiber web may involve controlling the dwell time of the polymeric material in a processing space of an extrusion system. In certain embodiments, the dwell time may range between about 1 minute and about 2,600 minutes. For example, the dwell time of the polymeric material may be between about 1 minute and about 1,500 minutes, between about 2 minutes and about 1,000 minutes, between about 2 minutes and about 500 minutes, between about 2 minutes and about 100 minutes, between about 3 minutes and about 90 minutes, between about 5 minutes and about 76 minutes, between about 5 minutes and about 50 minutes, between about 5 minutes and about 30 minutes, or between about 1 minute and about 15 minutes. In some embodiments, the dwell time of a polymeric material in a processing space is less than about 2,000 minutes, less than about 1,500 minutes, less than about 1,000 minutes, less than about 500 minutes, less than about 200 minutes, less than about 100 minutes, less than about 75 minutes, less than about 50 minutes, less than about 30 minutes, less than about 20 minutes, less than about 15 minutes, less than about 10 minutes, or less than about 5 minutes. Other ranges and values of dwell time are also possible.

The polymer throughput may range, for example, between about 0.45 kg/hour (1 lb/hour) and about 90 kg/hour (200 lbs/hour). For instance, the polymer throughput may be between about 0.45 kg/hour (1lb/hour) and 67.5 kg/hour (150 lbs/hours), between about 0.45 kg/hour (1 lb/hour) and 45 kg/hour (100 lbs/hour), between about 0.9 kg/hour (2 lbs/hour) and about 40.5 kg/hour (90 lbs/hour), between about 9 kg/hour (20 lbs/hour) and about 38.2 kg/hour (85 lbs/hour), between about 9 kg/hour (20 lbs/hour) and about 27 kg/hour (60 lbs/hour), between about 18 kg/hour (40 lbs/hour) and about 38 kg/hour (85 lbs/hour), or between about 0.45 kg/hour (1 lb/hour) and 9 kg/hour (20 lbs/hour). In some embodiments, the polymer throughput may be less than about 90 kg/hour (200 lbs/hour), less than about 67.5 kg/hour (150 lbs/hour), less than about 45 kg/hour (100 lbs/hour), less than about 38.3 kg/hour (85 lbs/hour), less than about 27 kg/hour (60 lbs/hour), less than about 18 kg/hour (40 lbs/hour), less than about 9 kg/hour (20 lbs/hour). In other embodiments, the polymer throughput may be greater than about 8 kg/hour (20 lbs/hour), greater than about 18 kg/hour (40 lbs/hour), greater than about 38.3 kg/hour (85 lbs/hour), greater than about 45kg/hour (100 lbs/hour), greater than about 67.5 kg/hour (150 lbs/hour), or greater than about 90 kg/hour (200 lbs/hour). Other ranges and values of polymer throughput are also possible.

The volume of the processing space where polymeric material can reside may be varied in some embodiments, e.g., to achieve a particular dwell time. The volume of the processing space may range, for example, between about 10 cm³ and about 30,000 cm³, between about 10 cm³ and about 25,000 cm³, between about 10 cm³ and about 20,000 cm³, between about 10 cm³ and about 15,000 cm³, between about 10 cm³ and about 12,000 cm³, between about 10 cm³ and about 10,000 cm³, between about 10 cm³ and about 8,000 cm³, between about 10 cm³ and about 6,000 cm³, between about 10 cm³ and about 4,000 cm³, between about 10 cm³ and about 2,000 cm³, between about 10 cm³ and about 1,000 cm³, or between about 10 cm³ and about 500 cm³. In some cases, the volume of the processing space is less than about 30,000 cm³, less than about 25,000 cm³, less than about 20,000 cm³, less than about 15,000 cm³, less than about 12,000 cm³, less than about 10,000 cm³, less than about 8,000 cm³, less than about 6,000 cm³, less than about 4,000 cm³, less than 2,000 cm³, less than about 1,000 cm³, or less than about 500 cm³. Other ranges and values of processing space volume are also possible.

The size of the extruder screw (e.g., screw diameter) may be varied in some embodiments, e.g., to achieve a particular processing space volume. In some embodiments, the extruder screw diameter may be between about 0.64 and about 15.2 cm (0.25 and about 6.0 inches). For instance, the extruder screw diameter may be between about 0.64 cm (0.25 inches) and about 14 cm (5.5 inches), between about 1.3 cm (0.5 inches) and about 12.7 cm (5.0 inches), between about 2.5 cm (1.0 inch) and about 10.1 cm (4.0 inches), between about 2.5 cm (1.0 inch) and about 8.9 cm (3.5 inches), or between about 2.5 cm (1.0 inch) and about 7.6 cm (3.0 inches). In some cases, extruder screw diameter may be about 15.2 cm (6.0 inches) or less, about 14 cm (5.5 inches) or less, about 12.7 cm (5.0 inches) or less, about 11.4 cm (4.5 inches) or less, about 10.1 cm (4.0 inches) or less, about 8.9 cm (3.5 inches) or less, about 7.6 cm (3.0 inches) or less, about 6.4 cm (2.5 inches) or less, about 5.1 cm (2.0 inches) or less, or about 3.8 cm (1.5 inches) or less. Other ranges and values of extruder screw diameters are also possible.

The extruder barrel diameter (e.g., the inner diameter of the barrel) may be varied in some embodiments and may be chosen to match the size of the extruder screw. For example, an extruder screw having a 10.1 cm (4 inch) diameter may be matched with an extruder barrel having an inner diameter of about 10.1 cm (4.0 inches). In some embodiments, the extruder barrel may have an inner diameter of between about 0.64 and about 15.2 cm (0.25 and about 6.0 inches). For instance, the inner diameter of the extruder barrel may be between about 0.64 cm (0.25 inches) and about 14 cm (5.5 inches), between about 1.3 cm (0.5 inches) and about 12.7 cm (5.0 inches), between about 2.5 cm (1.0 inch) and about 10.1 cm (4.0 inches), between about 2.5 cm (1.0 inch) and about 8.9 cm (3.5 inches), or between about 2.5 cm (1.0 inch) and about 7.6 cm (3.0 inches). In some cases, the inner diameter of the extruder barrel may be about 15.2 cm (6.0 inches) or less, about 14 cm (5.5 inches) or less, about 12.7 cm (5.0 inches) or less, about 11.4 cm (4.5 inches) or less, about 10.1 cm (4.0 inches) or less, about 8.9 cm (3.5 inches) or less, about 7.6 cm (3.0 inches) or less, about 6.4 cm (2.5 inches) or less, about 5.1 cm (2.0 inches) or less, or about 3.8 cm (1.5 inches) or less. Other ranges and values of extruder barrel inner diameters are also possible.

In certain embodiments, the length of the extruder barrel may be varied, e.g., to achieve a particular processing space volume. In some embodiments, the length of the extruder barrel may be between about 0.3 m (1 ft) and about 4.6 m (15 ft). For instance, the length of the extruder barrel may be between about 0.3 m (1 ft) and about 3.7 m (12 ft), between about 0.3 m (1 ft) and about 3 m (10 ft), between about 0.3 m (1 ft) and about 2.4 m (8 ft), between about 0.3 m (1 ft) and about 1.8 m (6 ft), between about 0.3 m (1 ft) and about 1.5 m(5 ft), between about 0.3 m (1 ft) and about 1.2 m (4 ft), or between about 0.3 m (1 ft) and about 0.6 m (2 ft). In some cases, the length of the extruder barrel is about 4.6 m (15 ft) or less, about 3.7 m (12 ft) or less, about 3 m (10 ft) or less, about 2.4 (8 ft) or less, about 1.8 m (6 ft) or less, about 1.5 m (5 ft) or less, about 1.2 m (4 ft) or less, about 0.9 m (3 ft) or less, or about 0.6 m (2 ft) or less. Other ranges and values of extruder barrel lengths are also possible.

In certain embodiments, the average diameter of one or more conduits between an extruder outlet and a die inlet (e.g., space where a polymeric material can reside) may be varied, e.g., to achieve a particular processing space volume. In some embodiments, the average conduit diameter may be between about 0.25 and about 25.4 cm (0.1 and about 10.0 inches). For instance, the average conduit diameter may be between about 0.76 cm (0.3 inches) and about 20.3 cm (8.0 inches), between about 0.76 cm (0.3 inches) and about 12.7 cm (5.0 inches), between about 0.25 cm (0.1 inches) and about 7.6 cm (3.0 inches), between about 0.25 cm (0.1 inches) and about 5.1 cm (2.0 inches), between about 1.3 cm (0.5 inches) and about 5.1 cm (2.0 inches), between about 0.25 cm (0.1 inches) and about 4.6 cm (1.8 inches), between about 0.25 cm (0.1 inches) and about 4.1 cm (1.6 inches), between about 0.25 cm (0.1 inches) and about 3.6 cm (1.4 inches), between about 0.25 cm (0.1 inches) and about 3 cm (1.2 inches), between about 0.25 cm (0.1 inches) and about 2.5 cm (1.0 inches), or between about 0.25 cm (0.1 inches) and about 2 cm (0.8 inches). In some cases, the average conduit diameter is about 25.4 cm (10.0 inches) or less, about 20.3 cm (8.0 inches) or less, about 15.2 cm (6.0 inches) or less, about 10.1 cm (4.0 inches) or less, about 7.6 cm (3.0 inches) or less, about 5.1 cm (2.0 inches) or less, about 4.6 cm (1.8 inches) or less, about 4.1 cm (1.6 inches) or less, about 3.6 cm (1.4 inches) or less, about 3 cm (1.2 inches) or less, about 2.5 cm (1.0 inches) or less, about 2 cm (0.8 inches) or less, or about 1.8 cm (0.7 inches) or less. Other ranges and values of average conduit diameters are also possible.

In certain embodiments, the combined length of one or more conduits between an extruder outlet and a die inlet (e.g., space where a polymeric material can reside) may be varied, e.g., to achieve a particular processing space volume. In some embodiments, the combined conduit length may be between about 0.15 m (0.5 ft) and about 22.9 m (75 ft). For instance, the combined conduit length may be between about 1.5 m (5 ft) and about 15.2 m (50 ft), between about 1.5 m (5 ft) and about 12.1 m (40 ft), between about 1.5 m (5 ft) and about 9.1 m (30 ft), between about 3 m (10 ft) and about 7.6 m (25 ft), between about 1.5 m (5 ft) and about 7.6 m (25 ft), between about 1.5 m (5 ft) and about 6 m (20 ft), between about 1.5 m (5 ft) and about 4.6 m (15 ft), between about 0.3 m (1 ft) and about 3.7 m (12 ft), between about 0.3 m (1 ft) and about 3 m (10 ft), between about 0.3 m (1 ft) and about 2.4 m (8 ft). In some cases, the conduit length may be about 22.9 m (75 ft) or less, about 15.2 m (50 ft) or less, about 12.2 m (40 ft) or less, about 9.1 m (30 ft) or less, about 7.6 m (25 ft) or less, about 6.1 m (20 ft) or less, about 4.6 m (15 ft) or less, about 3.6 m (12 ft) or less, about 3 m (10 ft) or less, about 2.4 m (8 ft) or less, or about 1.8 m (6 ft) or less. Other ranges and values of combined conduit lengths are also possible.

The volume of the die body (including the spin pack) where polymeric material can reside may be varied in some embodiments. The volume of the die body may range, for example, between about 300 cm$^3$ and about 15,000 cm$^3$, between about 300 cm$^3$ and about 13,000 cm$^3$, between about 300 cm$^3$ and about 11,000 cm$^3$, between about 300 cm$^3$ and about 9,000 cm$^3$, between about 300 cm$^3$ and about 6,000 cm$^3$, between about 300 cm$^3$ and about 4,000 cm$^3$, between about 300 cm$^3$ and about 2,000 cm$^3$, between about 300 cm$^3$ and about 1,000 cm$^3$, or between about 300 cm$^3$ and about 600 cm$^3$. In some cases, the volume of the die body is 15,000 cm$^3$, less than about 13,000 cm$^3$, less than about 10,000 cm$^3$, less than about 8,000 cm$^3$, less than about 6,000 cm$^3$, less than about 4,000 cm$^3$, less than 2,000 cm$^3$, less than about 1,000 cm$^3$, or less than about 600 cm$^3$. Other ranges and values of die volume are also possible.

In some embodiments, an extrusion process described herein may include a particular die temperature range or value. In general, the die temperature may be selected to suitably soften (e.g., melt) the polymeric material that is to be formed into fibers. In some embodiments, the die temperature is between about 204 °C (400 °F) and about 332 °C (630 °F). For instance, the die temperature may be between about 210 °C (410 °F) and about 315 °C (600 °F), between about 210 °C (410 °F) and about 304 °C (580 °F), between about 215 °C (420 °F) and about 288 °C (550 °F), or between about 215 °C (420 °F) and about 260 °C (500 °F). In certain embodiments, the die temperature may be greater than about 204 °C (400 °F), greater than about 215 °C (420 °F), greater than about 227 °C (440 °F), greater than about 238 °C (460 °F), greater than about 249 °C (480 °F), or greater than about 260 °C (500 °F). In other embodiments, the die temperature may be less than about 332 °C (630 °F), less than about 288 °C (550 °F), less than about 260 °C (500 °F), or less than about 232 °C (450 °F). Other ranges and values of die temperatures are also possible.

The temperature of the extruder barrel typically varies from the inlet of the extruder to the outlet of the extruder to allow the polymeric material to flow more easily. The minimum temperature used to heat the polymer in the extruder barrel may be, for example, at least about 149 °C (300 °F), at least about 177 °C (350 °F), at least about 204 °C (400 °F), or at least about 216 °C (420 °F). The maximum temperature of the extruder barrel may be, for example, between about 204 °C (400 °F) and about 332 °C (630 °F). For instance, the maximum temperature of the extruder barrel may be between about 210 °C (410 °F) and about 316 °C (600 °F), between about 210 °C (410 °F) and about 304 °C (580 °F), between about 216 °C (420 °F) and about 288 °C (550 °F), between about 216 °C (420 °F) and about 249 °C (480 °F), or between about 216 °C (420 °F) and about 260 °C (500 °F). In certain embodiments, the maximum temperature of the extruder barrel may be greater than about 204 °C (400 °F), greater than about 216 °C (420 °F), greater than about 227 °C (440 °F), greater than about 238 °C (460 °F), greater than about 249 °C (480 °F), or greater than about 260 °C (500 °F). In other embodiments, the maximum temperature of the extruder barrel may be less than about 332 °C (630 °F), less than about 288 °C (550 °F), less than about 260 °C (500 °F), or less than about 232 °C (450 °F). In some embodiments, the maximum temperature of the extruder barrel is at least about 5.5 °C (10 °F) lower, at least about 11 °C (20 °F) lower, at least about 16.5 °C (30 °F) lower, or at least about 22 °C (40 °F) lower than the temperature of the die body. Other ranges and values of temperatures of the extruder barrel are also possible.

The process air temperature may also be varied. In some embodiments, the process air temperature may be between about 204 °C (400 °F) and about 332 °C (630 °F). For instance, the process air temperature may be between about 210 °C (410 °F) and about 316 °C (600 °F), between about 210 °C (410 °F) and about 304 °C (580 °F), between about 216 °C (420 °F) and about 288 °C (550 °F), between about 227 °C (440 °F) and about 277 °C (530 °F), or between about 216 °C (420 °F) and about 260 °C (500 °F). Other ranges and values of process air temperatures are also possible.

In some embodiments, it may be desirable to vary the process air volume. As described above, the process air is the heated air on either side of the die tip where the fibers are formed. This heated air (typically the same temperature as the die tip) impinges the fibers and helps attenuate the fibers to the final fiber size. It is believed that, in some embodiments, as the air volume increases, the fiber diameter can decrease. The process air volume can be selected as appropriate. In some embodiments, the process air volume may be between about 450 kilogram/hour-meter (kg/hr·m) (1,000 pounds/hour-meter) (lbs/hr·m) and about 1,800 kg/hr·m (4,000 lbs/hr·m). For instance, the process air volume may be between about 675 kg/hr·m (1,500 lbs/hr·m) and about 1,710 kg/hr·m (3,800 lbs/hr·m), between about 1,125 kg/hr·m (2,500 lbs/hr·m) and about 1,688 kg/hr·m (3,750 lbs/hr·m), or between about 1,350 kg/hr·m (3,000 lbs/hr·m) and about 1,575 kg/hr·m (3,500 lbs/hr·m). Other ranges and values of process air volumes are also possible.

The quench air temperature may also be varied. In some embodiments, the quench air temperature may be between about -18 °C (0 °F) and about 93 °C (200 °F). For instance, the quench air temperature may be between about -18 °C (0 °F) and about 65 °C (150 °F), between about -18 °C (0 °F) and about 38 °C (100 °F), between about - 18 °C (0 °F) and about 24 °C (75 °F), between about -18 °C (0 °F) and about 10 °C (50 °F), between about -18 °C (0 °F) and about -1 °C (30 °F), or between about -18 °C (0 °F) and about -7 °C (20 °F). Other ranges and values of quench air temperatures are also possible.

In some embodiments, it may be desirable to vary the quench air volume. In some embodiments, the quench air volume may be between about 0 kilogram/hour (kg/hr) (0 pounds/hour (lbs/hr)) and about 338 kg/hr (750 lbs/hr). For instance, the quench air volume may be between about 0 kg/hr (0 lbs/hr) and about 225 kg/hr (500 lbs/hr), between about 0 kg/hr (0 lbs/hr) and about 113 kg/hr (250 lbs/hr), or between about 0 kg/hr (0 lbs/hr) and about 68 kg/hr (150 lbs/hr). Other ranges and values of quench air volumes are also possible.

The size of the die outlets (e.g., holes) and number of outlets per inch for the die can generally be selected as desired. In some embodiments, the die can have about 13.8 holes per cm (35 holes per inch) with 0.0318 cm (0.0125") holes. In certain embodiments, the die can have about 27.6 holes per cm (70 holes per inch) with 0.0178 cm (0.007") holes. In some embodiments, the die can have from about 9.8 holes per cm (25 holes per inch) to about 98.4 holes per cm (250 holes per inch). In certain cases, the die may include about 13.8 holes per cm (35 holes per inch) or greater, about 19.7 holes per cm (50 holes per inch) or greater, or about 27.6 holes per cm (70 holes per inch) or greater. Other dies can optionally be used.

In some embodiments, the distance from the die tip to the collector may be varied. The distance from the die tip to the collector may be, for example, between about 7.6 cm (3 inches) and about 203 cm (80 inches). For instance, the distance from the die tip to the collector may be between about 7.6 cm (3 inches) and about 127 cm (50 inches), between about 10.1 cm (4 inches) and about 101.6 cm (40 inches), between about 12.7 cm (5 inches) and about 63.5 cm (25 inches), or between about 15.2 cm (6 inches) and about 38.1 cm (15 inches). Other ranges and values of distances from the die tip to the collector are also possible.

The vacuum level created by the suction box can be selected as appropriate. In some embodiments, the vacuum level may be between about 2.5 cm (1 inches) of water and about 152.4 cm (60 inches) of water. For instance, the vacuum level may be between about 25.4 cm (10 inches) of water and about 127 cm (50 inches) of water, between about 50.8 cm (20 inches) of water and about 101.6 (40 inches) of water, between about 50.8 cm (20 inches) of water and about 76.2 cm (30 inches) of water, or between about 76.2 cm (30 inches) of water and about 101.6 cm (40 inches) of water.

The line speed at which the collector belt moves can be selected as desired to form a fiber web. In some embodiments, the collector belt may move at a line speed between about 0.3 m/min (1 ft/min) and about 121.9 m/min (400 ft/min). For instance, the collector belt may move at a line speed between about 3.0 m/min (10 ft/min) and about 61 m/min (200 ft/min), between about 15.2 m/min (50 ft/min) and about 45.7 m/min (150 ft/min), between about 15.2 m/min (50 ft/min) and about 30.5 m/min (100 ft/min), or between about 22.9 m/min (75 ft/min) and about 45.7 m/min (150 ft/min).

It should be understood that the values and ranges of the parameters described above can be used in different combinations to control fiber formation during an extrusion process. For example, in some embodiments a relatively low dwell time and a relatively low throughput may be used to form fine fibers. For instance, in one set of embodiments, a method may include subjecting the polymeric material to a dwell time of less than about 30 minutes and a throughput of less than about 38.2 kg/hr (85 lbs/hr). In another set of embodiments, the polymeric material may have a dwell time of less than about 50 minutes and a throughput of less than about 24.8 kg/hr (55 lbs/hr). In some embodiments, using these or other parameters, fiber webs having relatively low surface densities of particles can be formed as described in more detail below.

In some embodiments, varying the above-noted parameters during an extrusion process, and/or using one or more additives described herein, may result in essentially none or relatively low amounts of polymer degradation during fiber formation. In some cases, such processes can be used to form fine fibers, such as ones having a diameter in one of the ranges described herein (e.g., an average diameter between about 0.1 and about 1.5 microns, or between about 0.1 and about 0.6 microns). Without wishing to be bound by any theory, the inventors believe that subjecting the polymer material used to form the fibers to relatively high temperatures and pressures for extended periods of time in an extrusion system can cause the polymeric material to degrade. Degradation may involve chain scission, i.e., shortening of the polymer chains to produce lower molecular weight polymers, and/or other forms of decomposition (e.g., chemical decomposition, thermal decomposition, ionization). As a result of polymer degradation, small polymeric particles may be formed. These particles may have the same chemical composition as the polymeric material used to form the fibers (but having a lower molecular weight), or may be a derivative of the polymeric material used to form the fibers. The particles may be associated with the fiber web in various configurations. For instance, the particles may reside on the surface of the fibers, on the surface of the fiber web, in the center of the fiber web, or in combinations thereof. As noted above, as the amount of degraded polymer increases, less fiber is produced per unit of polymer. For fiber webs used for filtration, for example, this occurrence is not desirable as it may result in increased basis weight in order to achieve the same level of performance as fiber webs without degraded polymer, all other factors being equal.

The shape and size of the polymeric particles formed may vary, and in some cases, the particles can even agglomerate to form larger particles. It should be understood that the polymeric particles described herein are different from fibers. The polymeric particles are non-fibrous, and generally have an aspect ratio (i.e., a length to largest cross-sectional dimension) of less than 50:1 and a largest cross-sectional dimension of at least 0.2 mm. In some embodiments, a particle may have a largest cross-sectional dimension of about 0.2 mm or greater, about 0.5 mm or greater, about 1.0 mm or greater, about 1.5 mm or greater, about 2.0 mm or greater, about 2.5 mm or greater, about 3.0 mm or greater, about 3.5 mm or greater, about 4.0 mm or greater, about 4.5 mm or greater, about 5.0 mm or greater, about 5.5 mm or greater, about 6.0 mm or greater, about 6.5 mm or greater, about 7.0 mm or greater, about 7.5 mm or greater, about 8.0 mm or greater, about 8.5 mm or greater, about 9.0 mm or greater, about 9.5 mm or greater, or about 10.0 mm or greater. Other values and ranges of particle size are also possible.

In certain embodiments, the average molecular weight of the particles formed during a fiber extrusion process may be less than about 1/2 the average molecular weight of the polymer used to form the fibers. For instance, the average molecular weight of the particles formed during a fiber extrusion process may be less than about 1/8, less than about 1/64, or less than about 1/200 the average molecular weight of the polymer used to form the fibers. Other values of molecular weight of the particles associated with a fiber web are also possible.

In some embodiments, a fiber web described herein may include a relatively low number of or essentially no particles on its surface. The amount of particles may be measured by determining the surface density of particles on the fiber web, i.e., the number of particles on a surface of the fiber web per unit area of the fiber web surface. For instance, a fiber web may have a surface density of particles of less than about 1.9 particles/cm$^2$ (12.0 particles/inch$^2$), less than about 1.8 particles/cm$^2$ (11.5 particles/inch$^2$), less than about 1.7 particles/cm$^2$ (11.0 particles/inch$^2$), less than about 1.6 particles/cm$^2$ (10.5 particles/inch$^2$), less than about 1.55 particles/cm$^2$ (10.0 particles/inch$^2$), less than about 1.5 particles/cm$^2$ (9.5 particles/inch$^2$), less than about 1.4 particles/cm$^2$ (9.0 particles/inch$^2$), less than about 1.3 particles/cm$^2$ (8.5 particles/inch$^2$), less than about 1.2 particles/cm$^2$ (8.0 particles/inch$^2$), less than about 1.2 particles/cm$^2$ (7.5 particles/inch$^2$), less than about 1.1 particles/cm$^2$ (7.0 particles/inch$^2$), less than about 1.0 particles/cm$^2$ (6.5 particles/inch$^2$), less than about 0.93 particles/cm$^2$ (6.0 particles/inch$^2$), less than about 0.85 particles/cm$^2$ (5.5 particles/inch$^2$), less than about 0.78 particles/cm$^2$ (5.0 particles/inch$^2$), less than about 0.7 particles/cm$^2$ (4.5 particles/inch$^2$), less than about 0.62 particles/cm$^2$ (4.0 particles/inch$^2$), less than about 0.54 particles/cm$^2$ (3.5 particles/inch$^2$), less than about 0.47 particles/cm$^2$ (3.0 particles/inch$^2$), less than about 0.42 particles/cm$^2$ (2.7 particles/inch$^2$), less than about 0.39 particles/cm$^2$ (2.5 particles/inch$^2$), less than about 0.34 particles/cm$^2$ (2.2 particles/inch$^2$), less than about 0.31 particles/cm$^2$ (2.0 particles/inch$^2$), less than about 0.28 particles/cm$^2$ (1.8 particles/inch$^2$), less than about 0.25 particles/cm$^2$ (1.6 particles/inch$^2$), less than about 0.23 particles/cm$^2$ (1.5 particles/inch$^2$), less than about 0.2 particles/cm$^2$ (1.3 particles/inch$^2$), less than about 0.16 particles/cm$^2$ (1.0 particles/inch$^2$, less than about 0.12 particles/cm$^2$ (0.8 particles/inch$^2$), less than about 0.08 particles/cm$^2$ (0.5 particles/inch$^2$), or less than about 0.05 particles/cm$^2$ (0.3 particles/inch$^2$), wherein each of the particles has a largest cross-sectional dimension of one of the ranges or values described above. For example, in one particular embodiment, a fiber web has a surface density of particles of less than about 0.47 particles/cm$^2$ (3.0 particles/inch$^2$), wherein each of the particles has a largest cross-sectional dimension of between about 0.2 mm or greater. In this embodiment, even though the fiber web may include some particles having a largest cross-sectional dimension smaller than about 0.2 mm, these particles are not accounted for in calculating the surface density of particles. In another embodiment, a fiber web has a surface density of particles of less than about 0.47 particles/cm$^2$ (3.0 particles/inch$^2$), wherein each of the particles has a largest cross-sectional dimension of about 1.0 mm or greater. In this embodiment, even though the fiber web may include some particles having a largest cross-sectional dimension smaller than about 1.0 mm, these particles are not accounted for in calculating the surface density of particles. Other surface densities of particles in a particular size range or value are also possible.

The number of particles per area of fiber web can be determined as follows. A sample of fiber web can be layered together with carbon paper and a white sheet of standard copy paper, where the carbon paper is positioned between the fiber web and the copy paper. The composite structure can be placed in a continuous belt press where the following conditions are employed: a line speed of 2.5 m/min, a pressure of 6 bar, and a temperature of about 20 °C - 27 °F (68 °F - 80 °F) (room temperature). After exposure to these conditions, the degraded polymer particles, if present, may lie at an elevated position compared to the fibers, and appear as small "dots" on the underlying copy paper. If a darker image is needed for detection, the copy paper can be photocopied with a standard copier to darken the carbon image. This copy paper image can be scanned using standard imaging software, and software (e.g., ImageJ software available for download at http://rsbweb.nih.gov/ij/) can be used to determine the number of "dots" on the image. These "dots" may be measured in pixels, and each pixel can be correlated to a certain size to determine the size and number of particles. For instance, 1 pixel may correspond to 0.2646 mm, so a "dot" having a size of 1 pixel on the image may correspond to 1 particle having a largest dimension of 0.2646 mm; a "dot" having a size of 4 pixels on the image may correspond to 1 particle having a largest dimension of 1.1 mm. Pixel sizes may vary depending on the imaging hardware and/or software used. To calculate a surface density of particles, wherein each of the particles has a largest cross-sectional dimension of, for example, about 1.0 mm or greater, only the "dots" having a size of at least 4 pixels (e.g., a largest cross-sectional dimension of about 1.0 mm or greater) would be counted. This number would be divided by the area of the fiber web used for counting the particles to determine the surface density of particles. In this particular instance, even though the fiber web may include some particles having a largest cross-sectional dimension smaller than about 1.0 mm, these particles are not accounted for for the purpose of this particular calculation.

In some embodiments, fiber webs having a value or range of surface density of particles described above can also have one or more of the values and ranges of the features and performance characteristics described below.

The fiber web of the invention is formed of fibers having an average diameter between about 0.1 microns and about 1.5 microns. For instance, the fiber web may include fibers (e.g., meltblown fibers) having an average diameter of between about 0.1 microns and about 1.3 microns, between about 0.1 microns and about 1.2 microns, between about 0.1 microns and about 1.0 microns, between about 0.25 microns and about 1.0 microns, between about 0.1 microns and about 0.8 microns, between about 0.1 microns and about 0.7 microns, between about 0.1 microns and about 0.6 microns, between about 0.1 microns and about 0.5 microns, or between about 0.1 microns and about 0.4 microns. In some embodiments, the average diameter of the fibers (e.g., meltblown fibers) in a fiber web may be about 1.5 microns or less, about 1.4 microns or less, about 1.3 microns or less, about 1.2 microns or less, about 1.1 microns or less, about 1.0 microns or less, about 0.9 microns or less, about 0.8 microns or less, about 0.7 microns or less, about 0.6 microns or less, about 0.5 microns or less, about 0.4 microns or less, or about 0.3 microns or less. In other embodiments, the average diameter of the fibers (e.g., meltblown fibers) in a fiber web may be greater than about 0.2 microns, greater than about 0.4 microns, greater than about 0.6 microns, greater than about 0.8 microns, greater than about 1.0 microns, or greater than about 1.2 microns. As used herein, fiber diameter is measured using scanning electron microscopy.

The fiber web can generally have any suitable thickness in the present disclosure. In some embodiments of the present disclosure, the fiber web has a thickness between about 0.013 mm (0.0005 inches) and about 1 mm (0.040 inches). For instance, the thickness of the fiber web may be between about 0.025 mm (0.001 inches) and about 0.76 mm (0.030 inches), between about 0.025 mm (0.001 inches) and about 0.51 mm (0.020 inches). In the present invention, the fiber web has a thickness between about 0.051 mm (0.002 inches) and about 0.51 mm (0.02 inches), and may have a thickness between about 0.15 mm (0.006 inches) and about 0.41 mm (0.016 inches), between about 0.051 mm (0.002 inches) and about 0.25 mm (0.010 inches), or between about 0.051 mm (0.002 inches) and about 0.51 mm (0.020 inches). In some instances of the present disclosure, the thickness of the fiber web may be less than or equal to about 1 mm (0.040 inches), less than or equal to about 0.76 mm (0.030 inches), or less than or equal to about 0.64 mm (0.025 inches). In the invention, the thickness is less than or equal to about 0.51 mm (0.020 inches), less than or equal to about 0.46 mm (0.018 inches), less than or equal to about 0.41 mm (0.016 inches), less than or equal to about 0.38 mm (0.015 inches), less than or equal to about 0.30 mm (0.012 inches), less than or equal to about 0.25 mm (0.010 inches), less than or equal to about 0.18 mm (0.0070 inches), less than or equal to about 0.15 mm (0.0060 inches), less than or equal to about 0.13 mm (0.0050 inches), or less than or equal to about 0.1 mm (0.0040 inches). In some instances of the present disclosure, the thickness of the fiber web may be greater than about 0.025 mm (0.0010 inches), or greater than about 0.76 mm (0.030 inches). In the present invention, the thickness of the fiber web is less than or equal to 0.5 mm (0.02 inches), and is greater than about 0.05 mm (0.0020 inches), greater than about 0.076 mm (0.0030 inches), greater than about 0.1 mm (0.0040 inches), greater than about 0.13 mm (0.0050 inches), greater than about 0.15 mm (0.0060 inches), greater than about 0.18 mm (0.0070 inches), greater than about 0.25 mm (0.010 inches), or greater than about 0.38 mm (0.015 inches). Combinations of the above-referenced ranges are also possible (e.g., a thickness of less than or equal to about 0.41 mm (0.016 inches) and greater than about 0.15 mm (0.0060 inches)). Other ranges are also possible. As referred to herein, thickness is determined according to the standard ASTM D1777.

In certain embodiments, the fiber webs described herein have a relatively high consistency (low variability) of thickness across the fiber web. For instance, the variability of thickness across the fiber web may be about 6.0 standard deviations or less, about 5.5 standard deviations or less, about 5.0 standard deviations or less, about 4.5 standard deviations or less, about 4.0 standard deviations or less, about 3.5 standard deviations or less, about 3.0 standard deviations or less, about 2.5 standard deviations or less, about 2.0 standard deviations or less, about 1.5 standard deviations or less, about 1.0 standard deviations or less, or about 0.5 standard deviations or less. Other values of thickness variability are also possible. The variability of thickness may be determined by taking a statistically significant number of measurements across the fiber web.

The basis weight of the fiber web can typically be selected as desired. In some embodiments of the present disclosure, the basis weight of the fiber web may be between about 1.0 $g/m^2$ and about 200 $g/m^2$ (e.g., between about 1.0 $g/m^2$ and about 100 $g/m^2$. In the present invention it is between about 15 $g/m^2$ and about 200 $g/m^2$, or between about 30 $g/m^2$ and about 200 $g/m^2$). For instance, the basis weight of the fiber web in the present disclosure may be between about 1.0 $g/m^2$ and about 70 $g/m^2$, between about 1.0 $g/m^2$ and about 50 $g/m^2$, between about 3.0 $g/m^2$ and about 30 $g/m^2$, or between about 3.0 $g/m^2$ and about 20 $g/m^2$. In some embodiments of the present disclosure, the basis weight of the fiber web is greater than about 1 $g/m^2$ (e.g., greater than about 10 $g/m^2$, and in the invention it is greater than about 15 $g/m^2$, greater than about 25 $g/m^2$, greater than about 30 $g/m^2$, greater than about 50 $g/m^2$, greater than about 75 $g/m^2$, greater than about 100 $g/m^2$, greater than about 125 $g/m^2$, greater than about 150 $g/m^2$, greater than about 175 $g/m^2$, or in the present disclosure greater than about 200 $g/m^2$), and/or in the present disclosure less than about 400 $g/m^2$ (e.g., in the present invention less than about 175 $g/m^2$, less than about 150 $g/m^2$, less than about 125 $g/m^2$, less than about 100 $g/m^2$, less than about 90 $g/m^2$, less than about 75 $g/m^2$, less than about 50 $g/m^2$, less than about 25 $g/m^2$, or in the present disclosure less than about 15 $g/m^2$). Combinations of the above-referenced ranges are also possible (e.g., a basis weight of less than about 200 $g/m^2$ and greater than about 30 $g/m^2$). Other ranges are also possible. As referred to herein, basis weight is determined according to ASTM D3776.

In certain embodiments, the fiber webs described herein have a relatively high consistency (low variability) of basis weight across the fiber web. For instance, the variability of basis weight across the fiber web may be about 6.0 standard deviations or less, about 5.5 standard deviations or less, about 5.0 standard deviations or less, about 4.5 standard deviations or less, about 4.0 standard deviations or less, about 3.5 standard deviations or less, about 3.0 standard deviations or less, about 2.5 standard deviations or less, about 2.0 standard deviations or less, about 1.5 standard deviations or less, about 1.0 standard deviations or less, or about 0.5 standard deviations or less. Other values of basis weight variability are also possible. The variability of basis weight may be determined by taking a statistically significant number of measurements across the fiber web.

In the invention, the fiber web include multiples layers (e.g., at least 2, 3, 4, 5, 6, 7, 8, 9, 10, 12, 14, 16, 18, or 20 layers). In some cases in the present disclosure, two or more layers of the same composition (e.g., having the same fiber type, fiber size, etc.) may be stacked together to form a thicker fiber web having a relatively homogeneous composition across the thickness of the web. In other cases of the present disclosure, two or more layers of different compositions can be stacked together to form a composite having different properties across the thickness of the web. Stacked layers are adhered to one another using any suitable method such as lamination and calendering.

Lamination may involve, for example, compressing two or more layers together using a flatbed laminator or any other suitable device at a particular pressure and temperature for a certain residence time (i.e., the amount of time spent under pressure and heat). For instance, the pressure may be between about 0.2 MPa (30 psi) to about 1 MPa (150 psi) (e.g., between about 0.2 MPa (30 psi) to about 0.6 MPa (90 psi), between about 0.4 MPa (60 psi) to about 0.8 MPa (120 psi), between about 0.2 and 0.4 MPa (30 and 60 psi), or between about 0.8 MPa (120 psi) and about 0.6 MPa (90 psi)); the temperature may be between about 24 °C (75 °F) and about 204 °C (400 °F) (e.g., between about 24 °C (75 °F) and about 149 °C (300 °F), between about 93 °C (200 °F) and about 177 °C (350 °F), or between about 135 °C (275 °F) and about 199 °C (390 °F)); and the residence time between about 1 second to about 60 seconds (e.g., between about 1 second to about 30 seconds, between about 10 second to about 25 seconds, or between about 20 seconds and about 40 seconds). Other ranges for pressure, temperature and residence time are also possible.

Calendering may involve, for example, compressing two or more layers together using calendar rolls under a particular linear pressure, temperature, and line speed. For instance, the linear pressure may be between about 893 kg/m (50 lb/inch) and about 7143 kg/m (400 lb/inch) (e.g., between about 3571 kg/m (200 lb/inch) and about 7143 kg/m (400 lb/inch), between about 893 kg/m (50 lb/inch) and about 3571 kg/m (200 lb/inch), or between about 1339 kg/m (75 lb/inch) and about 5357 kg/m (300 lb/inch)); the temperature may be between about 24 °C (75 °F) and about 204 °C (400 °F) (e.g., between about 24 °C (75 °F) and about 149 °C (300 °F), between about 93 °C (200 °F) and about 177 °C (350 °F), or between about 135 °C (275 °F) and about 199 °C (390 °F)); and the line speed may be between about 1.5 m/min (5 ft/min) to about 30.5 m/min (100 ft/min) (e.g., between about 1.5 m/min (5 ft/min) to about 24.4 m/min (80 ft/min), between about 3.0 m/min (10 ft/min) to about 15.2 m/min (50 ft/min), between about 4.6 m/min (15 ft/min) to about 30.5 m/min (100 ft/min), or between about 6.1 m/min (20 ft/min) to about 27.4 m/min (90 ft/min)). Other ranges for linear pressure, temperature and line speed are also possible.

In certain embodiments, the fiber webs described herein may have a relatively high surface area. In certain embodiments, a fiber web may have a surface area between about 0.1 $m^2/g$ and about 6.0 $m^2/g$. For instance, a fiber web may have a surface area between about 0.1 $m^2/g$ and about 6.0 $m^2/g$, between about 0.5 $m^2/g$ and about 6.0 $m^2/g$, between about 1.0 $m^2/g$ and about 6.0 $m^2/g$, between about 1.3 $m^2/g$ and about 6.0 $m^2/g$, between about 1.5 $m^2/g$ and about 6.0 $m^2/g$, between about 1.7 $m^2/g$ and about 6.0 $m^2/g$, between about 1.8 $m^2/g$ and about 6.0 $m^2/g$, between

about 2.0 m$^2$/g and about 6.0 m$^2$/g, or between about 2.5 m$^2$/g and about 6.0 m$^2$/g. In some cases, a fiber web has a surface area of about 1.0 m$^2$/g or greater, about 1.3 m$^2$/g or greater, 1.5 m$^2$/g or greater, about 1.6 m$^2$/g or greater, about 1.7 m$^2$/g or greater, about 1.8 m$^2$/g or greater, about 1.9 m$^2$/g or greater, about 2.0 m$^2$/g or greater, about 2.1 m$^2$/g or greater, 2.2 m$^2$/g or greater, about 2.3 m$^2$/g or greater, about 2.4 m$^2$/g or greater, about 2.5 m$^2$/g or greater, about 2.6 m$^2$/g or greater, about 2.7 m$^2$/g or greater, about 2.8 m$^2$/g or greater, 2.9 m$^2$/g or greater, or about 3.0 m$^2$/g or greater. As determined herein, surface area is measured through use of a standard BET surface area measurement technique. The BET surface area is measured according to section 10 of Battery Council International Standard BCIS-03A, "Recommended Battery Materials Specifications Valve Regulated Recombinant Batteries", section 10 being "Standard Test Method for Surface Area of Recombinant Battery Separator Mat". Following this technique, the BET surface area is measured via adsorption analysis using a BET surface analyzer (e.g., Micromeritics Gemini III 2375 Surface Area Analyzer) with nitrogen gas; the sample amount is between 0.5 and 0.6 grams in a 3/4" tube; and, the sample is allowed to degas at 75 degrees C for a minimum of 3 hours.

The mean pore size (mean flow pore) of the fiber web may also vary. In some embodiments of the present disclosure, a fiber web has a mean pore size between about 1 micron and about 30 microns. For instance, the mean pore size in the present disclosure may be between about 0.1 microns and about 10 microns, between about 0.1 microns and about 3 microns. The mean pore size in the invention is between about 0.1 microns and about 2.0 microns, or between about 0.1 microns and about 1 micron. The mean pore size in the disclosure is between about 1 micron and about 20 microns, between about 1 micron and about 15 microns, between about 5 microns and about 15 microns, between about 1 micron and about 10 microns, or between about 5 microns and about 15 microns. In certain embodiments of the present disclosure, the mean pore size may be less than or equal to about 30 microns, less than or equal to about 25 microns, less than or equal to about 20 microns, less than or equal to about 15 microns, less than or equal to about 10 microns, less than or equal to about 6 microns, less than or equal to about 5 microns, less than or equal to about 3 microns, less than or equal to about 2.5 microns. In the present invention, it is less than or equal to about 2 microns, less than or equal to about 1.5 microns, less than or equal to about 1.0 micron, less than or equal to about 0.8 microns, less than or equal to about 0.6 microns, less than or equal to about 0.5 microns, less than or equal to about 0.4 microns, less than or equal to about 0.3 microns, or less than or equal to about 0.2 microns. In the invention, the mean pore size may be greater than about 0.1 microns, greater than about 0.2 microns, greater than about 0.3 microns, greater than about 0.35 microns, greater than about 0.4 microns, greater than about 0.5 microns, greater than about 0.6 microns, greater than about 0.8 microns, or greater than about 1 micron. In the present disclosure, it is greater than about 2 microns, greater than about 3 microns, greater than about 5 microns, greater than about 10 microns, greater than about 15 microns, greater than about 20 microns, greater than about 25 microns, or greater than about 30 microns. Combinations of the above-referenced ranges are also possible (e.g., a mean pore size of less than or equal to about 1.0 micron and greater than about 0.3 microns). Other values and ranges of mean pore size are also possible. As used herein, mean pore size is measured according to the standard ASTM F-316-80 Method B, BS6410, e.g., using a Capillary Flow Porometer made by Porous Materials, Inc.

In some embodiments, a bubble point of a fiber web may be measured. The bubble point refers to the largest pore size within the fiber web. In some embodiments, a fiber web has a bubble point of between about 0.1 micron and about 30 microns. For instance, the bubble point may be between about 0.1 microns and about 10 microns, between about 0.1 microns and about 3 microns, between about 0.1 microns and about 1 micron, between about 1 micron and about 20 microns, between about 1 micron and about 15 microns, between about 1.2 microns and about 7 microns, between about 1 micron and about 10 microns, or between about 5 microns and about 15 microns. In certain embodiments, the bubble point may be less than or equal to about 30 microns, less than or equal to about 25 microns, less than or equal to about 20 microns, less than or equal to about 15 microns, less than or equal to about 10 microns, less than or equal to about 7 microns, less than or equal to about 6 microns, less than or equal to about 5 microns, less than or equal to about 3 microns, less than or equal to about 2.5 microns, less than or equal to about 2 microns, less than or equal to about 1.5 microns, less than or equal to about 1.0 micron, less than or equal to about 0.8 microns, less than or equal to about 0.6 microns, less than or equal to about 0.5 microns, less than or equal to about 0.4 microns, less than or equal to about 0.3 microns, or less than or equal to about 0.2 microns. In other embodiments, the bubble point may be greater than about 0.1 microns, greater than about 0.2 microns, greater than about 0.3 microns, greater than about 0.35 microns, greater than about 0.4 microns, greater than about 0.5 microns, greater than about 0.6 microns, greater than about 0.8 microns, greater than about 1 micron, greater than about 2 microns, greater than about 3 microns, greater than about 5 microns, greater than about 10 microns, greater than about 15 microns, greater than about 20 microns, greater than about 25 microns, or greater than about 30 microns. Combinations of the above-referenced ranges are also possible (e.g., a bubble point of less than or equal to about 1.0 micron and greater than about 0.3 microns). Other values and ranges of bubble point are also possible. As used herein, bubble point is measured according to the standard ASTM F-316-80 Method B, BS6410 e.g., using a Capillary Flow Porometer made by Porous Materials Inc.

In some embodiments, the fiber webs described herein have a certain ratio of bubble point to mean pore size. In some embodiments, the ratio of bubble point to mean pore size is less than or equal to about 10:1, less than or equal to about 8:1, less than or equal to about 6:1, less than or equal to about 5:1, less than or equal to about 4:1, less than or equal to about 3:1, less than or equal to about 2.5:1, less than or equal to about 2:1, or less than or equal to about 1.5:1, In certain embodiments, the ratio of bubble point to mean pore size is greater than or equal to about 1:1, greater than or equal to about 1.5:1, greater than or equal to about 2:1, greater than or equal to about 2.5:1, greater than or equal to about 3:1, greater than or equal to about 4:1, greater than or equal to about 5:1, greater than or equal to about 6:1, greater than or equal to about 8:1, or greater than or equal to about 10:1. Combinations of the above-referenced ranges are also possible (e.g., a ratio of greater than about 1:1 and less than or equal to about 3:1). Other ranges are also possible.

In some embodiments, the solidity of the fiber web may be measured. The solidity is the volume fraction of media occupied by the solids (e.g., fibers) and is therefore the ratio of the solids volume per unit mass divided by the media's volume per unit mass. The solidity can be derived from the fiber web porosity based on the following equation solidity (%) = 1 - porosity (%). In some embodiments, the solidity of a fiber web described herein may range between about 5% and about 70%. For instance, the solidity may be greater than or equal to about 5%, greater than or equal to about 10%, greater than or equal to about 20%, greater than or equal to about 25%, greater than or equal to about 30%, greater than or equal to about 40%, greater than or equal to about 50%, greater than or equal to about 60%, or greater than or equal to about 70%. In some embodiments, the solidity of the fiber web may be less than about 70%, less than about 60%, less than about 55%, less than about 50%, less than about 40%, less than about 30%, less than about 20%, or less than about 10%. Combinations of the above-referenced ranges are also possible (e.g., a solidity of greater than or equal to about 25% and less than about 55%). Other values and ranges of solidity are also possible. As used herein, solidity is expressed by the following formula: basis weight / (bulk fiber density × thickness).

Typically, the fiber web is formed of one or more polymers. Exemplary polymers include polyolefins (e.g., polypropylenes), polyesters (e.g., polybutylene terephthalate, polybutylene naphthalate), polyamides (e.g., nylons), polycarbonates, polyphenylene sulfides, polystyrenes, polyurethanes (e.g., thermoplastic polyurethanes). Optionally, the polymer(s) may contain fluorine atoms. Examples of such polymers include PVDF and PTFE. Examples of specific polymers that may be used include a polypropylene manufactured by LyondellBasell (MF650Y), a polypropylene manufactured by Total Petrochemicals (3962), a polypropylene manufactured by Exxon (PP3546G and ACHV6936G1 Metocene PP), a polypropylene manufactured by Borealis (HL512FB), a polyester (PBT) manufactured by Ticona (HB85151M1 CX2008) and a nylon manufactured by BASF (Ultramid B3SQ661). Other polymers suitable for use in an extrusion process can also be used.

In some embodiments, the fiber web includes one or more additives such as a binder, a lubricant, a slip agent, a surfactant, a coupling agent, a crosslinking agent, amongst others. In certain instances, one or more additives can be used to reduce or eliminate the number of polymeric particles formed on or in a fiber web.

Generally, the fiber web includes a small weight percentage of an additive. For example, the fiber web may include less than about 10%, less than about 8%, less than about 6%, less than about 5%, or less than about 4% of an additive. In some cases, the fiber web may include between about 1% and about 10%, between about 1% and about 8%, between about 1% and about 5% of an additive, or between about 1% and about 2.5% of an additive. In certain embodiments, the fiber web may include less than about 5%, less than about 3%, less than about 2%, or less than about 1% of a fatty acid additive as described below. In some embodiments, the additive may be added to the polymer material used to form the fibers when the polymeric material is in a molten (e.g., melted) state. In other embodiments, the additive coats the fibers after the fibers have been formed.

In some embodiments, a fiber web may include an additive (e.g., a slip agent or other type of additive) in the form of a lipid. In some cases, the additive comprises a fatty acid (e.g., a saturated fatty acid, an unsaturated fatty acid, a mono-unsaturated fatty acid, a poly-unsaturated fatty acid). In certain embodiments, the fatty acid includes an amide group (e.g., a fatty acid amide). Non-limiting examples of fatty acid amides include stearamide, behenamide, erucamide, N-(2-hdriethyl) erucamide, lauramide, N,N'-ethylene-bis-oleamide, N,N'-ethylene bissteamide, oleamide, oleyl palmitamide, stearyl erucamide, tallow amide, arachidonylethanolamide, N-arachidonylmaleimide, mixtures thereof, and derivatives thereof.

Examples of specific additives that may be used include an additive provided by Standridge Color Corp., having a supplier part no.: 22686, and an additive containing provided by Standridge Color Corp., having a supplier part no. 10SAM1044.

In certain embodiments, the additive is in the form of a fatty acid having a $C_n$ (carbon) chain, where n is an integer. In some cases, n is 2 or greater, 4 or greater, 6 or greater, 8 or greater, 10 or greater, 12 or greater, 14 or greater, 16 or greater, 18 or greater, 20 or greater, 22 or greater, 24 or greater, 26 or greater, 28 or greater, 30 or greater, 32 or greater, 34 or greater, 36 or greater, 38 or greater, or 40 or greater. In other cases, n is less than or equal to 50, less than or equal to 45, less than or equal to 40, less than or equal to 35, less than or equal to 40, less than or equal to 35, less than or equal to 30, less than or equal to 25, less than or equal to 20, less than or equal to 15, less than or equal to 10, or less than or equal to 5.

The fiber webs described herein may have various performance characteristics. In some cases, the fiber webs have performance characteristics that enable them to be suitable for use as filter media.

In some embodiments, methods described herein for forming meltblown fibers can result in a fiber web having a relatively low air permeability. For instance, the air permeability of a fiber web may be less than about 9144 l/m$^2$/s (1,800 ft$^3$/min/ft$^2$ (CFM)), less than about 7620 l/m$^2$/s (1,500 CFM), less than about 6604 l/m$^2$/s (1,300 CFM), less than about 5080 l/m$^2$/s (1,000 CFM), less than about 4572 l/m$^2$/s (900 CFM), less than about 4064 l/m$^2$/s (800 CFM), less than about 3810 l/m$^2$/s (750 CFM), less than about 3556 l/m$^2$/s (700 CFM), less than about 3048 l/m$^2$/s (600 CFM), less than about 2540 l/m$^2$/s (500 CFM), less than about 2032 l/m$^2$/s (400 CFM), less than about 1524 l/m$^2$/s (300 CFM), less than about 1016 l/m$^2$/s (200 CFM), less than about 508 l/m$^2$/s (100 CFM), less than about 254 l/m$^2$/s (50 CFM), less than about 229 l/m$^2$/s (45 CFM), less than about 203 l/m$^2$/s (40 CFM), less than about 178 l/m$^2$/s (35 CFM), less than about 152 l/m$^2$/s (30 CFM), less than about 127 l/m$^2$/s (25 CFM), less than about 102 l/m$^2$/s (20 CFM), less than about 76 l/m$^2$/s (15 CFM), less than about 51 l/m$^2$/s (10 CFM), or less than about 25 l/m$^2$/s (5 CFM). In some embodiments, the air permeability may be greater than about 5.08 l/m$^2$/s (1 CFM), greater than about 10.2 l/m$^2$/s (2 CFM), greater than about 25 l/m$^2$/s (5 CFM), greater than about 51 l/m$^2$/s (10 CFM), greater than about 76 l/m$^2$/s (15 CFM), greater than about 102 l/m$^2$/s (20 CFM), greater than about 127 l/m$^2$/s (25 CFM), greater than about 152 l/m$^2$/s (30 CFM), greater than about 203 l/m$^2$/s (40 CFM), greater than about 254 l/m$^2$/s (50 CFM), greater than about 381 l/m$^2$/s (75 CFM), greater than about 508 l/m$^2$/s (100 CFM), greater than about 1016 l/m$^2$/s (200 CFM), greater than about 2540 l/m$^2$/s (500 CFM), greater than about 5080 l/m$^2$/s (1,000 CFM), greater than about 6604 l/m$^2$/s (1,300 CFM), or greater than about 7620 l/m$^2$/s (1,500 CFM). In general, the air permeability of the fiber web can vary between about 10 l/m$^2$/s (2 CFM) and about 9144 l/m$^2$/s (1800 CFM) (e.g., between about 51 l/m$^2$/s (10 CFM) and about 9144 l/m$^2$/s (1800 CFM), between about 51 l/m$^2$/s (10 CFM) and about 7620 l/m$^2$/s (1,500 CFM), between about 51 l/m$^2$/s (10 CFM) and about 5080 m$^3$/min (1,000 CFM), between about 51 m$^3$/min (10 CFM) and about 3810 l/m$^2$/s (750 CFM), between about 203 l/m$^2$/s (40 CFM) and about 3810 l/m$^2$/s (750 CFM), between about 51 l/m$^2$/s (10 CFM) and about 3048 l/m$^2$/s (600 CFM), between about 51 l/m$^2$/s (10 CFM) and about 2540 l/m$^2$/s (500 CFM), between about 51 l/m$^2$/s (10 CFM) and about 2032 l/m$^2$/s (400 CFM), between about 51 l/m$^2$/s (10 CFM) and about 1524 l/m$^2$/s (300 CFM), between about 51 l/m$^2$/s (10 CFM) and about 1016 l/m$^2$/s (200 CFM), between about 51 l/m$^2$/s (10 CFM) and about 508 l/m$^2$/s (100 CFM), or between about 51 l/m$^2$/s (10 CFM) and about 254 l/m$^2$/s (50 CFM)). Combinations of the above-referenced ranges are also possible (e.g., an air permeability of greater than about 10 l/m$^2$/s (2 CFM) and less than about 178 l/m$^2$/s (35 CFM)). Other ranges are also possible. As used herein, air permeability is measured according to the standard ASTM D737-75. The air permeability may be measured at a pressure of 12.5 mm $H_2O$ (e.g., for relatively low permeability measurements) or at a pressure of 250 mm $H_2O$ (e.g., for relatively high permeability measurements). Unless otherwise indicated, the values described herein for air permeability are measured at a pressure of 250 mm $H_2O$.

The fiber webs described herein may have different ranges of NaCl particle filtration efficiencies. The NaCl particle filtration efficiency is [1-(C/C$_0$)]*100%, where C is the NaCl particle concentration after passage through the fiber web and Co is the NaCl particle concentration before passage through the filter. To measure NaCl particle filtration efficiency, a 100 cm$^2$ surface area of the fiber web can be tested with NaCl (sodium chloride) particles having a 0.26 micron mass mean diameter with a geometric standard deviation less than 1.83, a concentration of 15 to 20 mg/cm$^3$, and a face velocity of 5.3 cm/s by a TSI 8130 CertiTest(TM) automated filter testing unit from TSI, Inc. equipped with a sodium chloride generator. The instrument measures a pressure drop (e.g., an airflow resistance) across the fiber web and the resultant penetration value on an instantaneous basis at a flow rate less than or equal to 115 liters per minute (lpm). Instantaneous readings can be defined as 1 pressure drop/penetration measurement. This test is described in ASTM D2 986-91.

A fiber web described herein may have a NaCl particle filtration efficiency between about 0.0001% and about 99.97%. For instance, the NaCl particle filtration efficiency may be between about 0.001% and about 99.97%, between about 0.01% and about 99.97%, between about 0.1% and about 99.97%, between about 1% and about 99.97%, between about 10.0% and about 99.97%, between about 40.0% and about 99.97%, between about 60.0% and about 99.97%, or between about 85.0% and about 99.97%. In some cases, the NaCl particle filtration efficiency is greater than about 10.0%, greater than about 20.0%, greater than about 30.0%, greater than about 40.0%, greater than about 50.0%, greater than about 60.0%, greater than about 70.0%, greater than about 80.0%, greater than about 90.0%, greater than about 95.0%, greater than about 97.0%, greater than about 98.0%, greater than about 99.0%, greater than about 99.5%, greater than about 99.9%, or greater than about 99.97%. Other ranges and values of NaCl particle filtration efficiency are also possible.

In some cases, a fiber web described herein may have an airflow resistance between about 0.1 mm $H_2O$ and about 50.0 mm $H_2O$. For instance, the air flow resistance may be between about 0.1 mm $H_2O$ and about 40.0 mm $H_2O$, between about 0.1 mm $H_2O$ and about 30.0 mm $H_2O$, between about 0.1 mm $H_2O$ and about 20.0 mm $H_2O$, between about 0.1 mm $H_2O$ and about 10.0 mm $H_2O$, between about 0.3 mm $H_2O$ and about 5.0 mm $H_2O$, between about 0.3 mm $H_2O$ and about 3.5 mm $H_2O$, between about 0.3 mm $H_2O$ and about 3.0 mm $H_2O$, between about 0.1 mm $H_2O$ and about 2.5 mm $H_2O$, or between about 0.1 mm $H_2O$ and about 2.0 mm $H_2O$. In some cases, the air flow resistance of a fiber web is less than about 50.0 mm $H_2O$, less than about 40.0 mm $H_2O$, less than about 30.0 mm $H_2O$, less than about

20.0 mm $H_2O$, less than about 10.0 mm $H_2O$, less than about 5.0 mm $H_2O$, or less than about 2.5 mm $H_2O$. In other cases, the air flow resistance of a fiber web is greater than about 1.0 mm $H_2O$, greater than about 2.5 mm $H_2O$, greater than about 5.0 mm $H_2O$, greater than about 10.0 mm $H_2O$, greater than about 20.0 mm $H_2O$, greater than about 30.0 mm $H_2O$, or greater than about 40.0 mm $H_2O$, Other ranges and values of air flow resistance are also possible. As used herein, air flow resistance is measured according to the standard ASTM D2 986-91 as described above.

In some embodiments, a fiber web described herein may have good liquid performance as measured in deionized water (e.g., water flux, water permeability) and in an aqueous silica dispersion (e.g., permeate turbidity, initial permeate flux and/or final permeate flux in the silica dispersion). Permeate refers to any amount of filtered water that passes through a media.

As used herein, water flow rate is measured by passing deionized water through a fiber web at a pressure of 0.1 MPa (20 psi) until 1,000 ml of permeate has been collected. The flow rate is determined when 1,000 ml of permeate has been collected. Water flux is calculated by dividing the flow rate (ml/min) by a sample effective area ($cm^2$) of the fiber web (i.e., the area exposed to fluid flow) and is expressed in ml/min·$cm^2$. In some embodiments, a fiber web described herein may have a water flux of between about 5 ml/min·$cm^2$ and about 200 ml/min·$cm^2$. For example, the water flux may be greater than or equal to about 5 ml/min·$cm^2$, greater than or equal to about 10 ml/min·$cm^2$, greater than or equal to about 20 ml/min·$cm^2$, greater than or equal to about 30 ml/min·$cm^2$, greater than or equal to about 40 ml/min·$cm^2$, greater than or equal to about 50 ml/min·$cm^2$, greater than or equal to about 60 ml/min·$cm^2$, greater than or equal to about 70 ml/min·$cm^2$, greater than or equal to about 80 ml/min·$cm^2$, greater than or equal to about 90 ml/min·$cm^2$, greater than or equal to about 100 ml/min·$cm^2$, greater than or equal to about 125 ml/min·$cm^2$, greater than or equal to about 150 ml/min·$cm^2$, or greater than or equal to about 175 ml/min·$cm^2$. In some embodiments, the fiber web may have a water flux of less than about 200 ml/min·$cm^2$, less than about 175 ml/min·$cm^2$, less than about 150 ml/min·$cm^2$, less than about 125 ml/min·$cm^2$, less than about 100 ml/min·$cm^2$, less than about 90 ml/min·$cm^2$, less than about 80 ml/min·$cm^2$, less than about 70 ml/min·$cm^2$, less than about 60 ml/min·$cm^2$, less than about 50 ml/min·$cm^2$, less than about 40 ml/min·$cm^2$, less than about 30 ml/min·$cm^2$, less than about 20 ml/min·$cm^2$, or less than about 10 ml/min·$cm^2$. Combinations of the above-referenced ranges are possible (e.g., a water flux of greater than about 10 ml/min·$cm^2$ and less than about 60 ml/min·$cm^2$). Other ranges are also possible.

Water permeability is determined by dividing the water flux by the applied pressure for determining flow rate (e.g., 0.1 MPa (20 psi)), and is expressed as ml/min·$cm^2$·MPa (ml/min·$cm^2$·psi). In some embodiments, a fiber web described in the present disclosure may have a water permeability of between about 14.5 ml/min·$cm^2$·MPa (0.1 ml/min·$cm^2$·psi) and about 1450 ml/min·$cm^2$·MPa (10.0 ml/min·$cm^2$·psi). For example, the water permeability may be greater than or equal to about 14.5 ml/min·$cm^2$·MPa (0.1 ml/min·$cm^2$·psi). In the present invention, the water permeability is greater than or equal to about 29 ml/min·$cm^2$·MPa (0.2 ml/min·$cm^2$·psi), greater than or equal to about 72.5 ml/min·$cm^2$·MPa (0.5 ml/min·$cm^2$·psi), greater than or equal to about 145 ml/min·$cm^2$·MPa (1.0 ml/min·$cm^2$·psi), greater than or equal to about 290 ml/min·$cm^2$·MPa (2.0 ml/min·$cm^2$·psi), greater than or equal to about 435 ml/min·$cm^2$·MPa (3.0 ml/min·$cm^2$·psi), greater than or equal to about 725 ml/min·$cm^2$·MPa (5.0 ml/min·$cm^2$·psi), greater than or equal to about 1015 ml/min·$cm^2$·MPa (7.0 ml/min·$cm^2$·psi), or greater than or equal to about 1450 ml/min·$cm^2$·MPa (10.0 ml/min·$cm^2$·psi). In some embodiments of the present invention, the water permeability may be less than or equal to about 1450 ml/min·$cm^2$·MPa (10.0 ml/min·$cm^2$·psi), less than or equal to about 1015 ml/min·$cm^2$·MPa (7.0 ml/min·$cm^2$·psi), less than or equal to about 870 ml/min·$cm^2$·MPa (6.0 ml/min·$cm^2$·psi), less than or equal to about 580 ml/min·$cm^2$·MPa (4.0 ml/min·$cm^2$·psi), less than or equal to about 290 ml/min·$cm^2$·MPa (2.0 ml/min·$cm^2$·psi), less than or equal to about 145 ml/min·$cm^2$·MPa (1.0 ml/min·$cm^2$·psi), or less than or equal to about 72.5 ml/min·$cm^2$·MPa (0.5 ml/min·$cm^2$·psi). Combinations of the above-referenced ranges are also possible (e.g., a water permeability of greater than or equal to 72.5 ml/min·$cm^2$·MPa (0.5 ml/min·$cm^2$·psi) and less than about 435 ml/min·$cm^2$·MPa (3.0 ml/min·$cm^2$·psi)). Other ranges are also possible.

In some embodiments, an initial permeate flux can be measured. As used herein, initial permeate flux is determined by passing an aqueous silica suspension through a fiber web at a pressure of 0.2 MPa (30 psi) until 50 ml of permeate has been collected. The initial permeate flux is calculated by dividing the flow rate (ml/min) of the suspension by a sample effective area ($cm^2$) of the fiber web (i.e., the area exposed to fluid flow) and is expressed in ml/min·$cm^2$. The flow rate is determined when 50 ml of permeate has been collected.

In some embodiments, a final permeate flux can be measured. Final permeate flux is determined by passing the aqueous silica suspension through the fiber web at a pressure of 0.2 MPa (30 psi) until 500 ml of permeate has been collected. The final permeate flux is calculated by dividing the flow rate (ml/min) of the suspension by a sample effective area ($cm^2$) of the fiber web (i.e., the area exposed to fluid flow) and is expressed in ml/min·$cm^2$. The flow rate is determined when 500 ml of permeate has been collected.

Under such testing conditions for initial permeate flux and final permeate flux, the flux gradually decreases until the filtration process is stopped after 50 ml (initial permeate flux) or 500 ml (final permeate flux) of the aqueous silica dispersion has passed through the filter. The occurrence of flux decrease - or "flux decline" (a measure of the decrease in flux from an initial permeate flux to a final permeate flux) - reflects a gradual clogging of the filter medium by silica particles. The initial flux reflects the filtration performance of a filter when clogging is limited (collected permeate is only 50 ml) and its value can sometimes match that of deionized water flux. The final flux reflects the filtration performance of the filter when a cake is formed and the retention mechanism is controlled by both the fiber web and the clogging layer.

The aqueous silica suspension used for determining initial permeate flux and final permeate flux is prepared by dispersing ISO 12103-1-A2 silica fine test dust (e.g., manufactured by Powder Technology) in deionized water at a concentration of 1,500 ppm. ISO 12103-1-A2 silica fine test dust has an estimated mean particle size of 8.7 microns, and the full particle size distribution ranges from between about 0.7 microns to about 84 microns.

In some embodiments, a fiber web described herein may have an initial permeate flux of between about 5 ml/min·cm$^2$ and about 200 ml/min·cm$^2$. For example, the initial permeate flux may be greater than or equal to about 5 ml/min·cm$^2$, greater than or equal to about 10 ml/min·cm$^2$, greater than or equal to about 20 ml/min·cm$^2$, greater than or equal to about 30 ml/min·cm$^2$, greater than or equal to about 40 ml/min·cm$^2$, greater than or equal to about 50 ml/min·cm$^2$, greater than or equal to about 60 ml/min·cm$^2$, greater than or equal to about 70 ml/min·cm$^2$, greater than or equal to about 80 ml/min·cm$^2$, greater than or equal to about 90 ml/min·cm$^2$, greater than or equal to about 100 ml/min·cm$^2$, greater than or equal to about 125 ml/min·cm$^2$, greater than or equal to about 150 ml/min·cm$^2$, or greater than or equal to about 175 ml/min·cm$^2$. In some embodiments, the fiber web may have an initial permeate flux of less than about 200 ml/min·cm$^2$, less than about 175 ml/min·cm$^2$, less than about 150 ml/min·cm$^2$, less than about 125 ml/min·cm$^2$, less than about 100 ml/min·cm$^2$, less than about 90 ml/min·cm$^2$, less than about 80 ml/min·cm$^2$, less than about 70 ml/min·cm$^2$, less than about 60 ml/min·cm$^2$, less than about 50 ml/min·cm$^2$, less than about 40 ml/min·cm$^2$, less than about 30 ml/min·cm$^2$, less than about 20 ml/min·cm$^2$, or less than about 10 ml/min·cm$^2$. Combinations of the above-referenced ranges are possible (e.g., an initial permeate flux of greater than about 5 ml/min·cm$^2$ and less than about 60 ml/min·cm$^2$). Other ranges are also possible.

In some embodiments, a fiber web described herein may have a final permeate flux of between about 1.5 ml/min·cm$^2$ and about 150 ml/min·cm$^2$. For example, the final permeate flux may be greater than or equal to about 1.5 ml/min·cm$^2$, greater than or equal to about 2 ml/min·cm$^2$, greater than or equal to about 5 ml/min·cm$^2$, greater than or equal to about 10 ml/min·cm$^2$, greater than or equal to about 20 ml/min·cm$^2$, greater than or equal to about 30 ml/min·cm$^2$, greater than or equal to about 40 ml/min·cm$^2$, greater than or equal to about 50 ml/min·cm$^2$, greater than or equal to about 60 ml/min·cm$^2$, greater than or equal to about 70 ml/min·cm$^2$, greater than or equal to about 80 ml/min·cm$^2$, greater than or equal to about 90 ml/min·cm$^2$, greater than or equal to about 100 ml/min·cm$^2$, or greater than or equal to about 125 ml/min·cm$^2$. In some embodiments, the fiber web may have a final permeate flux of less than about 150 ml/min·cm$^2$, less than about 125 ml/min·cm$^2$, less than about 100 ml/min·cm$^2$, less than about 90 ml/min·cm$^2$, less than about 80 ml/min·cm$^2$, less than about 70 ml/min·cm$^2$, less than about 60 ml/min·cm$^2$, less than about 50 ml/min·cm$^2$, less than about 40 ml/min·cm$^2$, less than about 30 ml/min·cm$^2$, less than about 20 ml/min·cm$^2$, less than about 10 ml/min·cm$^2$, or less than about 5 ml/min·cm$^2$. Combinations of the above-referenced ranges are possible (e.g., a final permeate flux of greater than about 2 ml/min·cm$^2$ and less than about 30 ml/min·cm$^2$). Other ranges are also possible.

In some embodiments, turbidity of a permeate that has passed through a fiber web can be measured. Turbidity refers to the haziness of a fluid caused by the presence of small particles dispersed in the solution. In general, a lower permeate turbidity reflects greater retentive capacity for the fiber web. As used herein, permeate turbidity is determined by passing an aqueous silica suspension, prepared as described above (i.e., 1,500 ppm silica), through a fiber web until 50 ml of permeate has been collected, and measuring turbidity of the collected permeate.

Turbidity can be measured with a nephelometer or a turbidimeter, which detects the amount of light scattered by the small particles when they are exposed to a light beam. Nephelometric Turbidity Unit (NTU) measurement is obtained by relating the light scattered by a liquid media to the light scattered by a known concentration of Formazin polymer. This unit of measure is recognized as a measure of the optical clarity of an aqueous sample. An example of a turbidimeter that can be used to measure turbidity is model Micro TPI/TPW, manufactured by HF Scientific, Inc. This meter is built to meet design criteria specified in ISO 7027 and DIN 27027 and satisfy criteria specified in Standard US EPA 180.1 on turbidity measurements.

In some embodiments of the present disclosure, a permeate turbidity of a dirty water solution that has passed through a fiber web may be between about 0.1 NTU and about 12.0 NTU. In certain embodiments, the permeate turbidity of a fiber web may be less than or equal to about 12.0 NTU, less than or equal to about 10.0 NTU. In the present invention the permeate turbidity is less than or equal to about 8.0 NTU, less than or equal to about 6.0 NTU, less than or equal to about 5.0 NTU, less than or equal to about 4.5 NTU, less than or equal to about 4.0 NTU, less than or equal to about 3.5 NTU, less than or equal to about 3.0 NTU, less than or equal to about 2.5 NTU, less than or equal to about 2.0 NTU, less than or equal to about 1.5 NTU, less than or equal to about 1.0 NTU, less than or equal to about 0.8 NTU, less than or equal to about 0.6 NTU, less than or equal to about 0.4 NTU, less than or equal to about 0.2 NTU, or less than or equal to about 0.1 NTU. In some embodiments of the invention, the permeate turbidity may be greater than or equal to about 0.1 NTU, greater than or equal to about 0.5 NTU, greater than or equal to about 0.7 NTU, greater than or equal to about 1.0 NTU, greater than or equal to about 1.5 NTU, greater than or equal to about 2.0 NTU, greater than or equal to about 3.0 NTU, greater than or equal to about 5.0 NTU, or greater than or equal to about 6.0 NTU. In the present disclosure, the permeate turbidity is greater than or equal to about 8.0 NTU, or greater than or equal to about 10.0 NTU. Combinations of the above-referenced ranges are also possible (e.g., a permeate turbidity of less than or equal to about 2.5 NTU and greater than about 0.1 NTU). Other ranges are also possible.

In some embodiments, a fiber web or filter media described herein is associated with a particular absolute micron rating. As used herein, an absolute micron rating of a fiber web or filter media refers to the diameter of the largest spherical particle that will pass through the web or media. Beyond this cut-off point, the web or media will capture any larger particle. The absolute micron rating of a fiber web or filter media may be measured under laboratory conditions by determining the fiber web's filtration efficiency, as described herein. In some embodiments, a filter media described herein has an absolute micron rating of about 0.1 microns, about 0.15 microns, about 0.2 microns, about 0.25 microns, about 0.3 microns, about 0.35 microns, about 0.4 microns, about 0.45 microns, about 0.5 microns, about 0.55 microns, about 0.6 microns, about 0.65 microns, about 0.7 microns, about 0.75 microns, about 0.8 microns, about 0.85 microns, about 0.9 microns, about 0.95 microns, or about 1.0 microns. Fiber webs having an absolute micron rating between the above-noted values are also possible (e.g., an absolute micron rating of between about 0.3 microns and about 0.5 microns, between about 0.35 microns and about 0.6 microns). Other absolute micron ratings and ranges of absolute micron ratings are also possible.

It should be understood that the fiber webs described herein having the values and ranges of the features and performance characteristics described above may be formed using different combinations of the parameters described above to control fiber formation during an extrusion process. For example, in some embodiments, a method involving subjecting the polymeric material used to form the fibers to a dwell time of less than about 85 minutes, and using an extruder barrel having an inner diameter of about 10.2 cm (4 inches) or less, may lead to fibers having small diameters (e.g., average diameter of about 1.0 microns or less, about 0.8 microns or less, or about 0.6 microns or less), fiber webs having relatively high surface areas (e.g., about 1.8 $m^2/g$ or greater, about 2.0 $m^2/g$ or greater, or about 2.2 $m^2/g$ or greater), and/or to fiber webs having relatively low amounts of polymer degradation (e.g., a surface density of polymeric particles of less than about 0.78 particles/$cm^2$ (5.0 particles/$in^2$), less than about 0.47 particles/$cm^2$ (3.0 particles/$in^2$), less than about 0.31 particles/$cm^2$ (2.0 particles/$in^2$), less than about 0.25 particles/$cm^2$ (1.6 particles/$in^2$), less than about 0.16 particles/$cm^2$ (1.0 particles/$in^2$), or less than about 0.12 particles/$cm^2$ (0.8 particles/$in^2$), less than about 0.08 particles/$cm^2$ (0.5 particles/$in^2$), or less than about 0.05 particles/$cm^2$ (0.3 particles/$in^2$), wherein each of the particles has a largest cross-sectional dimension of 1.0 mm or greater). In other embodiments, a method of forming fibers involving subjecting the polymeric material used to form the fibers to a processing space having a volume less than about 25,000 $cm^3$, less than about 15,000 $cm^3$, or less than about 9,000 $cm^3$ may lead to fibers and/or fiber webs having these characteristics.

In certain embodiments, a fiber web described herein may be combined with one or more other components such as a substrate and/or a scrim, optionally with an adhesive. Examples of substrates, scrims and adhesives are described in U.S. Publication No. 2009/0120048, filed November 07, 2008, and entitled "Meltblown Filter Medium". In some cases, a fiber web or a composite including a fiber web can be charged. In general, any of a variety of techniques can be used to charge the fiber web and or a composite including the fiber web to form an electret web. Examples include AC and/or DC corona discharge. In some embodiments, the composite is subjected to a discharge of at least 1 kV/cm (e.g., at least 5 kV/cm, at least 10 kV/cm), and/or at most 30 kV/cm (e.g., at most 25 kV/cm, at most 20 kV/cm). For example, in certain embodiments, the composite can be subjected to a discharge of from 1 kV/cm to 30 kV/cm (e.g., from 5 kV/cm to 25 kV/cm, from 10 kV/cm to 20 kV/cm). Exemplary processes are disclosed, for example, in U.S. Pat. No. 5,401,446.

In some embodiments, a fiber web described herein can be a part of a filter element. Examples of filter elements include gas turbine filter elements, heavy duty air filter elements, automotive air filter elements, HVAC air filter elements, HEPA filter elements, vacuum bag filter elements, fuel filter elements, and oil filter elements. Such filter elements can be incorporated into corresponding filter systems (gas turbine filter systems, heavy duty air filter systems, automotive air filter systems, HVAC air filter systems, HEPA filter systems, vacuum bag filter systems, fuel filter systems, and oil filter systems). Vacuum filter bag systems are commonly used in home vacuum cleaners. In such embodiments, a filter medium can optionally be prepared by coating a paper with the meltblown material. In certain embodiments, a filter medium can be prepared using a wet laid or dry laid product (e.g., cellulose, polymer, glass). A filter medium can optionally be pleated into any of a variety of configurations (e.g., panel, cylindrical). Examples of filter media are described in more detail in U.S. Publication No. 2009/0120048, filed November 07, 2008, and entitled "Meltblown Filter Medium".

The following examples are exemplary and not intended as limiting.

EXAMPLES 1-10

Examples 1-10 show that various process parameters of an extrusion process can be varied to form fiber webs having small fiber diameters, high surface area, low air permeabilities, and/or low levels of polymer degradation according to certain embodiments described herein.

A total of 80 experiments were conducted in which different fiber webs were formed with either polypropylene or polyester (polybutyleneterephthalate) fibers using a process similar to the one shown in FIG. 1, while varying various process conditions including extruder barrel inner diameter, die body temperature, and polymer throughput. Performance characteristics and physical properties of the resulting fiber webs including air permeability, level of polymer degradation (e.g., surface density of particles), surface area, and fiber size were measured, and the values were compiled and input into modeling software, where mathematical modeling of these properties was performed. The models were refined (through reduction) until an acceptable accountability of the combined effect was obtained. A response calculation for each of the performance characteristics and physicals properties was determined.

The resulting, non-coded, mathematical models were then placed into an Excel spreadsheet, where a simple mathematical equation function was utilized to render the predicted physical property values of fiber webs that may be produced using different processing conditions (e.g., varying the values for extruder barrel inner diameter, die body temperature and polymer throughput). The results of the calculations are shown in Tables 1-3.

For each of the Examples shown in Tables 1-3, the following processing conditions would be used: extruder temperature profile (ramping) of 149 °C (300 °F), 163 °C (325 °F), 177 °C (350 °F), 191 °C (375 °F), 204 °C (400 °F), 218 °C (425 °F), 232 °C (450 °F); the process air temperature being the same as that of the die body temperature; a process air setting of 1,418 kg/hr (3150 lbs/hr); a die to collector distance of 20.3 cm (8.0 inches); a quench air rate of 101 kg/hr (225 lbs/hr); and a vacuum level of 496 $m^3$ (17,500 $ft^3$).

**Table 1**

| | Comparative Example 1 | Example 1 | Example 2 | Example 3 |
|---|---|---|---|---|
| Extruder Barrel Inner Diameter (cm) [inches] | 12.7 [5] | 5.1 [2] | 2.5 [1] | 2.5 [1] |
| Extruder Barrel Length (cm) [inches] | 381 [150] | 152 [60] | 76 [30] | 76 [30] |
| Conduit Diameter (cm) [inches] | 3.8 [1.5] | 2.5 [1] | 1.9 [0.75] | 1.9 [0.75] |
| Conduit Length (cm) [inches] | 366 [144] | 366 [144] | 366 [144] | 366 [144] |
| Polymer Type | Polypropylene (PP) | PP | PP | PP |
| Polymer Throughput (kg/hr) [lb/hr] | 13.6 [30] | 26.3 [58] | 27.7 [61] | 46.3 [102] |
| Die Body Temp (°C) [°F] | 243 [470] | 266 [510] | 266 [510] | 277 [530] |
| Dwell Time (min) | 157 | 13 | 9 | 5 |
| Volume of processing space ($cm^3$) | 25459 | 6300 | 4541 | 4541 |
| Air Permeability ($m^3$/min) [$ft^3$/min/$ft^2$] | 11.6 [409] | 11.6 [409] | 11.6 [409] | 11.6 [409] |
| Surface Area ($m^2$/g) | 1.14 | 1 | 0.95 | -- |
| Surface density of particles* (particles/$cm^2$) [particles/$in^2$] | 0.51 [3.29] | 0 | 0 | 0.04 [0.25] |
| Fiber Diameter (microns) | 0.95 | 1.2 | 1.28 | 1.44 |
| * The particles refer to ones having a largest cross-sectional dimension of 1.0 mm or greater. | | | | |

Examples 1-3 show that by reducing the extruder barrel inner diameter, extruder barrel length and conduit diameter, and increasing the polymer throughput, the dwell times of the polymer in the processing space can be reduced. The surface density of particles of degraded polymer in fiber webs produced by processes under such conditions would be reduced compared to that of Comparative Example 1, where the dwell time is relatively higher. Examples 1-3 also show that by decreasing the volume of the processing space (e.g., by reducing the extruder barrel length and conduit diameter), relatively high throughputs can be used and can be used to form fiber media having similar performance characteristics (e.g., air permeability) as media formed by the processing conditions shown for Comparative Example 1 (e.g., lower throughputs but higher processing space volumes). Higher throughputs may result in lower manufacturing costs.

**Table 2**

| | Comparative Example 2 | Example 4 | Example 5 | Example 6 | Example 7 |
|---|---|---|---|---|---|
| Extruder Barrel Inner Diameter (cm) [inches] | 12.7 [5] | 5 [2] | 5 [2] | 2.5 [1] | 2.5 [1] |
| Extruder Barrel Length (cm) [inches] | 381 [150] | 152 [60] | 152 [60] | 76 [30] | 76 [30] |
| Conduit Diameter (cm) [inches] | 3.8 [1.5] | 2.5 [1] | 2.5 [1] | 1.9 [0.75] | 1.9 [0.75] |
| Conduit Length (cm) [inches] | 366 [144] | 366 [144] | 366 [144] | 366 [144] | 366 [144] |
| Polymer Type | Polypropylene (PP) | PP | PP | PP | PP |
| Polymer Throughput (kg/hr) [lb/hr] | 13.6 [30] | 13.6 [30] | 13.6 [30] | 13.6 [30] | 13.6 [30] |
| Die Body Temp (°C) (°F) | 243 [470] | 243 [470] | 266 [510] | 266 [510] | 277 [530] |
| Dwell Time (min) | 100 | 24 | 24 | 17 | 17 |
| Volume of processing space ($cm^3$) | 25459 | 6300 | 6300 | 4541 | 4541 |
| Air Permeability ($m^3$/min) [$ft^3$/min/$ft^2$] | 11.6 [409] | 11.4 [403] | 7.4 [261] | 6.5 [229] | 4.1 [143] |
| Surface Area ($m^2$/g) | 1.14 | 1.23 | 1.48 | 1.56 | 1.7 |
| Surface density of particles* (particles/$cm^2$) [particles/$in^2$] | 0.51 [3.29] | 0.12 [0.75] | 0.12 [0.75] | 0 | 0 |
| Fiber Diameter (microns) | 0.95 | 1.13 | 0.96 | 0.96 | 0.84 |
| * The particles refer to ones having a largest cross-sectional dimension of 1.0 mm or greater. | | | | | |

Examples 4-7 show that by reducing the extruder barrel inner diameter, extruder barrel length and conduit diameter, the dwell time of the polymer in the processing space can be reduced. The surface density of particles of degraded polymer in fiber webs produced by processes under such conditions would be reduced compared to that of Comparative Example 2, where the dwell time is relatively higher. The processing conditions shown in Examples 4-7 can also result in fiber webs having lower air permeabilities and higher surface areas. Smaller fiber diameters (Example 7) can also be produced.

**Table 3**

| | Comparative Example 2 | Example 8 | Example 9 | Example 10 |
|---|---|---|---|---|
| Extruder Barrel Inner Diameter (cm) [inches] | 12.7 [5] | 3.8 [1.5] | 3.8 [1.5] | 3.8 [1.5] |
| Extruder Barrel Length (cm) [inches] | 381 [150] | 114 [45] | 114 [45] | 114 [45] |
| Conduit Diameter (cm) [inches] | 3.8 [1.5] | 1.9 [0.75] | 1.9 [0.75] | 1.9 [0.75] |
| Conduit Length (cm) [inches] | 366 [144] | 366 [144] | 366 [144] | 366 [144] |
| Polymer Type | Polypropylene (PP) | PP | PP | PP |
| Polymer Throughput (kg/hr) [lb/hr] | 13.6 [30] | 13.6 [30] | 6.8 [15] | 6.8 [15] |
| Die Body Temp (°C) [°F] | 243 [470] | 316 [600] | 288 [550] | 293 [560] |
| Dwell Time (min) | 100 | 18 | 36 | 36 |
| Volume of processing space ($cm^3$) | 25459 | 4862 | 4862 | 4862 |
| Air Permeability ($m^3$/min) [$ft^3$/min/$ft^2$] | 11.6 [409] | ~2.5 [~89] | 1.95 [69] | 1.3 [46] |
| Surface Area ($m^2$/g) | 1.14 | 2.13 | 2.07 | 2.14 |

(continued)

|  | Comparative Example 2 | Example 8 | Example 9 | Example 10 |
|---|---|---|---|---|
| Surface density of particles* (particles/cm$^2$) [particles/in$^2$] | 0.51 [3.28] | 0.05 [0.30] | 0.08 [0.53] | 0.08 [0.53] |
| Fiber Diameter (microns) | 0.96 | 0.50 | 0.67 | 0.60 |
| * The particles refer to ones having a largest cross-sectional dimension of 1.0 mm or greater. | | | | |

Examples 8-10 show that by reducing the extruder barrel inner diameter, extruder barrel length and conduit diameter, the dwell time of the polymer in the processing space can be reduced. The surface density of particles of degraded polymer in fiber webs produced by processes under such conditions would be reduced compared to that of Comparative Example 2, where the dwell time is relatively higher. The processing conditions shown in Examples 8-10 can also result in fiber webs having lower air permeabilities, higher surface areas, and smaller fiber diameters.

EXAMPLES 11-13

Examples 11-12 show that fiber webs having small fiber diameters can be formed using extrusion processes described herein, and that multiple fiber webs formed by such a process can be stacked to form a single, thicker fiber web.
In Example 11, a polypropylene resin was processed using a 3.8 cm (1.5 inch) diameter extruder and a meltblown web (i.e., a base layer) was formed having a mean fiber size of 500 nm (S1). S1 does not form part of the invention and is provided for information purposes only. Eight hand sheets of the base layer were stacked on top of one another and compressed with a flatbed laminator at 0.6 MPa (90 psi), 135 deg C (275 deg F), for a residence time of 24 seconds (S2). Ten hand sheets of the base layer were also stacked on top of one another and compressed with a flatbed laminator at 0.6 MPa (90 psi), 135 deg C (275 deg F), for a residence time of 24 seconds (S3). The properties of these webs are summarized in Table 4.

**Table 4** - **Example 11**

|  | Basis weight (g/m$^2$) | Air permeability (l/m$^2$/s) [CFM] | Thickness (microns) | Mean Flow Pore (microns) | Bubble point (microns) | Solidity (%) |
|---|---|---|---|---|---|---|
| Meltblown "base" layer - S1*** | 17 | 1976** (51*) [389** (10*)] | 150 | 5.3 | 10.3 | 5 |
| 8 base layers compressed altogether - S2 | 136 | 18.2** [3.6**] | 295 | 0.5 | 1.75 | -- |
| 10 base layers compressed altogether - S3 | 170 | 14.7** [2.9**] | 360 | 0.4 | 1.6 | -- |
| *measurement at a pressure of 250 mm of water - ** measurement at 12.5 mm of water | | | | | | |
| *** S1 does not form part of the invention and is provided for information purposes only. | | | | | | |

In Example 12, a polypropylene resin was processed with a 3.8 cm (1.5 inch) diameter extruder and a meltblown web (i.e., a base layer) was formed having a mean fiber size of 500 nm. In sample S4, four hand sheets of the base layer were stacked a top each other and compressed between calender rolls under a linear pressure of 1607 kg/m (90 lb/inch) at 60 deg C (140 deg F) and line speed of 9.1 mpm (30 fpm). Properties of these webs are summarized in Table 5.

**Table 5 - Example 12**

| | Basis weight (g/m$^2$) | Air permeability (l/m$^2$/s) [CFM] | Thickness (microns) | Mean Flow Pore (microns) | Bubble point (microns) | Solidity (%) |
|---|---|---|---|---|---|---|
| 4 base layers calendared altogether - S4 | 68 | 11.4* [2.25*] | 115 | 0.35 | 1.25 | 58 |
| *Air permeability measured at 12.5 mm of water | | | | | | |

Liquid filtration performance characteristics for the fiber webs described in Tables 4 and 5 were measured.

All liquid filtration measurements were performed using fiber webs having that were cut into circular pieces having a diameter of 47 mm. The cut fiber webs were placed into a holder having an O-ring that reduced the effective area of the fiber web to 12.5 cm$^2$. The fiber web was first wetted by soaking the web for 1 minute in a mixture isopropanol/water 70/30 v/v. The web was then soaked in deionized water for 1 minute to exchange the isopropanol with water. The fiber web was then rinsed in deionized water for 1 minute. The fiber web was then placed into a filtration cell (an in-line stainless steel filter holder with a diameter of 47 mm) while the fiber web was still fully wetted with water.

Water flux was measured by passing deionized water through a fiber web at a pressure of 0.1 MPa (20 psi) until 500 ml of permeate was collected. Water flux was calculated by dividing the flow rate (ml/min) by the effective area of the fiber web (12.5 cm$^2$). Table 6 shows the water flux and water permeability measured for the fiber webs described in Tables 4 and 5.

**Table 6**

| Sample ID | Water flux (ml/min·cm$^2$) | Water permeability (ml/ ml/min·cm$^2$·MPa) [ml/min·cm$^2$·psi] |
|---|---|---|
| S2 (compressed-8L) MFP -0.5 micron | 40 | 290 [2] |
| S3 (compressed-10L) MFP -0.4 micron | 20 | 145 [1] |
| S4 (calendered) MFP -0.35 micron | 15 | 109 [0.75] |

Table 7 shows initial permeate flux, final permeate flux, flux decline, and permeate turbidity that was measured after passing an aqueous silica dispersion (having an turbidity of 1,040 NTU prior to filtration) through the fiber webs described in Tables 4 and 5. The aqueous silica dispersion, prepared by dispersing ISO 12103-1-A2 silica fine test dust (manufactured by Powder Technology) in deionized water at a concentration of 1,500 ppm, was passed through each of the fiber webs at a pressure of 0.2 MPa (30 psi) until 50 ml of permeate was collected (initial permeate flux) or until 500 ml of permeate was collected (final permeate flux). The collected permeate was used for the turbidity measurements using a turbidimeter (model Micro TPI/ TPW, manufactured by HF Scientific, Inc., which is built to meet design criteria specified in ISO 7027 and DIN 27027) as per US EPA 180.1 Standard specifications.

Table 7

| Sample ID | Initial permeate flux at 50 ml permeate* (ml/min.cm$^2$) | Final permeate flux at 500 ml permeate* (ml/min.cm$^2$) | Flux decline (%) * | Permeate turbidity (NTU) |
|---|---|---|---|---|
| S2 (compressed-8L) MFP -0.5 microns | 12 | 5 | 58 | 0.5 |
| S3 (compressed-10L) MFP -0.4 microns | 20 | 6.5 | 67.5 | 1.9 |
| S4 (calendered) MFP -0.35 microns | 11.5 | 4.5 | 61 | 0.45 |

\* All flux measurements were conducted at 0.2 MPa (30 psi)

As shown in Tables 6 and 7, each of samples S2, S3 and S4 had a relatively high water permeability, meaning the fiber webs had relatively low resistances across the webs. Each of the samples also had relatively low permeate turbidity measurements when filtering a 1,500 ppm aqueous silica dispersion, indicating that the fiber webs have a relatively large retentive properties. Furthermore, when filtering a 1,500 ppm aqueous silica dispersion, each of the fiber webs had relatively low final permeate flux measurements, indicating that the fiber webs had a relatively low tendency to clog.

Example 13

Surface area measurements of several fiber web samples were performed. Sample S5 included two S1 samples (as described in Example 11) that were compressed together using a flatbed laminator at a temperature of 135 °C (275 °F), a pressure of 0.4 MPa (60 psi), and a residence time of 24 seconds. Sample S6 included three S1 samples that were compressed together using a flatbed under the same conditions.

Sample NB1 included fibers having an average fiber diameter of 1 micron. NB1 does not form part of the invention and is provided for information purposes only. Sample NB2 included two NB1 samples that were compressed together. Sample NB3 included three NB1 samples that were compressed together.

Sample MB1 included fibers having an average fiber diameter of 2.5 microns. MB1 does not form part of the invention and is provided for information purposes only. Sample MB2 included two MB1 samples that were compressed together. Sample MB3 included three MB1 samples that were compressed together.

The results are shown in Table 8.

**Table 8**

| Sample ID | Surface area (m$^2$/g) | Compression setting |
|---|---|---|
| S1*-fiber size: 0.5 microns | 3.0 | Uncompressed |
| S5 (2xS1 compressed) | 2.7 | Flatbed laminator : 135 °C (275 °F) - 0.4 MPa (60 psi) - 24 sec |
| S6 (3xS1 compressed) | 2.7 | Flatbed laminator : 135 °C (275 °F) - 0.4 MPa (60 psi) - 24 sec |
| NB1 *-fiber size: 1 micron | 1.7 | Uncompressed |
| NB2 (2xNB1 compressed) | 1.6 | Flatbed laminator : 135 °C (275 °F) - 0.4 MPa (60 psi) - 24 sec |
| NB3 (3xNB1 compressed) | 1.55 | Flatbed laminator : 135 °C (275 °F) - 0.4 MPa (60 psi) - 24 sec |
| MB1 *- fiber size 2.5 microns | 1.0 | Uncompressed |

(continued)

| Sample ID | Surface area (m²/g) | Compression setting |
|---|---|---|
| MB2 (2xMB1 compressed) | 0.95 | Flatbed laminator : 135 °C (275 °F) - 0.4 MPa (60 psi) - 24 sec |
| MB3 (3xMB1 compressed) | 0.9 | Flatbed laminator : 135 °C (275 °F) - 0.4 MPa (60 psi) - 24 sec |
| * These samples do not form part of the invention and are provided for information purposes only. | | |

**Claims**

1. A fiber web comprising:
   a plurality of meltblown fibers having an average fiber diameter between 0.1 microns and 1.5 microns, wherein the fiber web has:

   a mean pore size of greater than 0.1 microns and less than 2.0 micron, wherein the mean pore size is measured according to the standard ASTM F-316- 80 Method B, BS6410;
   a water permeability of greater than 29 ml/min·cm²·MPa (0.2 ml/min·cm²·psi), wherein the water permeability is determined by dividing the water flux by the applied pressure for determining flow rate, wherein the water flux is determined by dividing the flow rate (ml/min) by the sample effective area (cm²) of the fiber web;
   a permeate turbidity of less than 8 NTU, wherein the permeate turbidity is determined by measurement with a turbidimeter which satisfies the criteria specified in Standard US EPA 180.1 on turbidity measurements;
   a basis weight between 15 g/m² and 200 g/m², wherein the basis weight is determined according to ASTM D3776; and
   a thickness between 0.05 mm (0.002 inches) and 0.5 mm (0.02 inches), wherein the thickness is determined according to the standard ASTM D1777, and
   wherein the fiber web is formed by laminating two or more layers of the plurality of meltblown fibers, or is formed by subjecting two or more layers of the plurality of meltblown fibers to a calendering process.

2. The fiber web of claim 1, wherein the fiber web has a surface area greater than 1.5 m²/g.

3. The fiber web of claim 1, a) wherein the basis weight of the fiber web is between 30 g/m² and 200 g/m², wherein the basis weight is determined according to the standard ASTM D3776; or b) wherein the fiber web has a consistency of basis weight across the fiber web of 3.0 standard deviations or less.

4. The fiber web of claim 1, a) wherein the thickness of the fiber web is between 0.15 mm (0.006 inches) and 0.4 mm (0.016 inches), wherein the thickness is determined according to the standard ASTM D1777; or b) wherein the fiber web has a consistency of thickness across the fiber web of 3.0 standard deviations or less.

5. The fiber web of claim 1, a) wherein the average fiber diameter of the plurality of meltblown fibers is less than 1.0 microns; preferably, wherein the average fiber diameter of the plurality of meltblown fibers is less than 0.6 microns.

6. The fiber web of claim 1, comprising a solidity of greater than or equal to 10% and less than 70%; preferably, comprising a solidity of greater than or equal to 25% and less than 55%, wherein the solidity is the basis weight / (bulk fiber density × thickness).

7. The fiber web of claim 1, wherein the mean pore size of the fiber web is greater than 0.2 microns and less than 1.5 microns; preferably, wherein the mean pore size of the fiber web is greater than 0.3 microns and less than 1.0 microns, wherein the mean pore size is measured according to the standard ASTM F-316- 80 Method B, BS6410.

8. The fiber web of claim 1, wherein the fiber web has an air permeability of greater than 10.2 l/m²/s and less than 178 l/m²/s (greater than 2 and less than 35 CFM); preferably, wherein the air permeability of the fiber web is greater than 10.2 l/m²/s and less than 127 l/m²/s (greater than 2 and less than 25 CFM), wherein the air permeability is measured according to the standard ASTM D737-75.

9. The fiber web of claim 1, a) wherein the water permeability of the fiber web is greater than 29 ml/min·cm²·MPa (0.2 ml/min·cm²·psi) and less than 590 ml/min·cm²·MPa (4 ml/min·cm²·psi) wherein the water permeability is determined by dividing the water flux by the applied pressure for determining flow rate wherein the water flux is determined by dividing the flow rate (ml/min) by the sample effective area ($cm^2$) of the fiber web; or, b) wherein the fiber web has an initial permeate flux greater than 5 ml/min·$cm^2$ and less than 200 ml/min·$cm^2$; preferably, wherein the initial permeate flux of the fiber web is greater than 5 ml/min·$cm^2$ and less than 60 ml/min·$cm^2$, wherein the initial permeate flux is determined by passing an aqueous silica suspension through a fiber web at a pressure of 0.21 MPa (30 psi) until 50 ml of permeate has been collected and dividing the flow rate of the suspension by the sample effective area of the fiber web, and wherein the flow rate is determined when 50 ml of permeate has been collected.

10. The fiber web of claim 1, wherein permeate turbidity of the fiber web is less than 5 NTU; preferably, wherein the permeate turbidity of the fiber web is less than 2.5 NTU, wherein the permeate turbidity is determined by measurement with a turbidimeter which satisfies the criteria specified in Standard US EPA 180.1 on turbidity measurements.

11. A filter element comprising the fiber web of claim 1.

12. A method comprising passing a liquid through the fiber web of claim 1.

13. The fiber web of claim 1, wherein the fiber web has a ratio of bubble point to mean pore size of less than 3:1, wherein the mean pore size is measured according to the standard ASTM F-316- 80 Method B, BS6410, and wherein bubble point is measured according to the standard ASTM F-316-80 Method B, BS6410 using a Capillary Flow Porometer.

**Patentansprüche**

1. Fasergewebe, umfassend:
eine Vielzahl von schmelzgeblasenen Fasern mit einem durchschnittlichen Faserdurchmesser zwischen 0,1 Mikrometer und 1,5 Mikrometer, wobei das Fasergewebe aufweist:

   eine mittlere Porengröße von mehr als 0,1 Mikrometer und weniger als 2,0 Mikrometer, wobei die mittlere Porengröße gemäß der Norm ASTM F-316-80 Methode B, BS6410 gemessen wird;
   eine Wasserdurchlässigkeit von mehr als 29 ml/min·$cm^2$·MPa (0,2 ml/min·$cm^2$·psi), wobei die Wasserdurchlässigkeit durch Division des Wasserflusses durch den zur Bestimmung der Flussrate angelegten Druck bestimmt wird, wobei der Wasserfluss durch Division der Flussrate (ml/min) durch die effektive Probenoberfläche ($cm^2$) des Fasergewebes bestimmt wird;
   eine Permeattrübung von weniger als 8 NTU, wobei die Permeattrübung durch Messung mit einem Trübungsmessgerät bestimmt wird, das die in der Norm US EPA 180.1 über Trübungsmessungen festgelegten Kriterien erfüllt;
   ein Flächengewicht zwischen 15 g/$m^2$ und 200 g/$m^2$, wobei das Flächengewicht gemäß ASTM D3776 bestimmt wird; und
   eine Dicke zwischen 0,05 mm (0,002 Zoll) und 0,5 mm (0,02 Zoll), wobei die Dicke gemäß der Norm ASTM D1777 bestimmt wird, und
   wobei das Fasergewebe durch Laminieren von zwei oder mehr Schichten aus der Vielzahl der schmelzgeblasenen Fasern gebildet wird, oder dadurch gebildet wird, dass zwei oder mehr Schichten aus der Vielzahl der schmelzgeblasenen Fasern einem Kalanderverfahren unterzogen werden.

2. Das Fasergewebe gemäß Anspruch 1, wobei das Fasergewebe eine Oberfläche von mehr als 1,5 $m^2$/g aufweist.

3. Das Fasergewebe gemäß Anspruch 1,

   a) wobei das Flächengewicht des Fasergewebes zwischen 30 g/$m^2$ und 200 g/$m^2$ liegt, wobei das Flächengewicht gemäß der Norm ASTM D3776 bestimmt wird;
   oder b) wobei das Fasergewebe eine Einheitlichkeit des Flächengewichts entlang des Fasergewebes von 3,0 oder weniger Standardabweichungen aufweist.

4. Das Fasergewebe gemäß Anspruch 1,

   a) wobei die Dicke des Fasergewebes zwischen 0,15 mm (0,006 Zoll) und 0,4 mm (0,016 Zoll) liegt, wobei die Dicke gemäß der Norm ASTM D1777 bestimmt wird;
   oder b) wobei das Fasergewebe eine Einheitlichkeit der Dicke entlang des Fasergewebes von 3,0 oder weniger Standardabweichungen aufweist.

5. Das Fasergewebe gemäß Anspruch 1,

a) wobei der durchschnittliche Faserdurchmesser der Vielzahl von schmelzgeblasenen Fasern weniger als 1,0 Mikrometer beträgt; wobei, vorzugsweise, der durchschnittliche Faserdurchmesser der Vielzahl von schmelzgeblasenen Fasern weniger als 0,6 Mikrometer beträgt.

6. Das Fasergewebe gemäß Anspruch 1, umfassend eine Festigkeit von mehr als oder gleich 10% und weniger als 70%; vorzugsweise, umfassend eine Festigkeit von mehr als oder gleich 25% und weniger als 55%, wobei die Festigkeit das Flächengewicht / (Schüttgutdichte $\times$ Dicke) ist.

7. Das Fasergewebe gemäß Anspruch 1, wobei die mittlere Porengröße des Fasergewebes größer als 0,2 Mikrometer und kleiner als 1,5 Mikrometer ist; wobei, vorzugsweise, die mittlere Porengröße des Fasergewebes größer als 0,3 Mikrometer und kleiner als 1,0 Mikrometer ist, wobei die mittlere Porengröße gemäß der Norm ASTM F-316-80 Methode B, BS6410 gemessen wird.

8. Das Fasergewebe gemäß Anspruch 1, wobei das Fasergewebe eine Luftdurchlässigkeit von mehr als 10,2 l/m$^2$/s und weniger als 178 l/m$^2$/s (mehr als 2 und weniger als 35 ft$^3$/min) aufweist; wobei, vorzugsweise, die Luftdurchlässigkeit des Fasergewebes mehr als 10,2 l/m$^2$/s und weniger als 127 l/m$^2$/s (mehr als 2 und weniger als 25 ft$^3$/min) beträgt, wobei die Luftdurchlässigkeit gemäß der Norm ASTM D737-75 gemessen wird.

9. Das Fasergewebe gemäß Anspruch 1,

a) wobei die Wasserdurchlässigkeit des Fasergewebes größer als 29 ml/min·cm$^2$·MPa (0.2 ml/min·cm$^2$·psi) und weniger als 590 ml/min·cm$^2$·MPa (4 ml/min·cm$^2$·psi) ist, wobei die Wasserdurchlässigkeit durch Division des Wasserflusses durch den zur Bestimmung der Flussrate angelegten Druck bestimmt wird, wobei der Wasserfluss durch Division der Flussrate (ml/min) durch die effektive Probenoberfläche (cm$^2$) des Fasergewebes bestimmt wird;

oder, b) wobei das Fasergewebe einen anfänglichen Permeatfluss von mehr als 5 ml/min·cm$^2$ und weniger als 200 ml/min·cm$^2$ aufweist; wobei, vorzugsweise, der anfängliche Permeatfluss des Fasergewebes mehr als 5 ml/min·cm$^2$ und weniger als 60 ml/min·cm$^2$ beträgt, wobei der anfängliche Permeatfluss durch Durchleiten einer wässrigen Kieselsuspension durch ein Fasergewebe bei einem Druck von 0,21 MPa (30 psi), bis 50 ml Permeat gesammelt wurden, und Division der Flussrate der Suspension durch die effektive Probenoberfläche des Fasergewebes bestimmt wird, wobei die Flussrate bestimmt wird, wenn 50 ml Permeat gesammelt wurden.

10. Das Fasergewebe gemäß Anspruch 1, wobei die Permeattrübung des Fasergewebes weniger als 5 NTU beträgt; wobei, vorzugsweise, die Permeattrübung des Fasergewebes weniger als 2,5 NTU beträgt, wobei die Permeattrübung durch Messung mit einem Trübungsmessgeräts bestimmt wird, das die in der Norm US EPA 180.1 über Trübungsmessungen festgelegten Kriterien erfüllt.

11. Filterelement, umfassend das Fasergewebe gemäß Anspruch 1.

12. Verfahren, umfassend das Durchleiten einer Flüssigkeit durch das Fasergewebe gemäß Anspruch 1.

13. Das Fasergewebe gemäß Anspruch 1, wobei das Fasergewebe ein Verhältnis von Blasenpunkt zu mittlerer Porengröße von weniger als 3:1 aufweist, wobei die mittlere Porengröße gemäß der Norm ASTM F-316-80 Methode B, BS6410 gemessen wird, und wobei der Blasenpunkt gemäß der Norm ASTM F-316-80 Methode B, BS6410 unter Verwendung eines Kapillarfluss-Porometers gemessen wird.

## Revendications

1. Nappe de fibres comprenant :
   une pluralité de fibres soufflées à l'état fondu ayant un diamètre de fibre moyen entre 0,1 micron et 1,5 micron, dans laquelle la nappe de fibres a :

   une taille de pore moyenne supérieure à 0,1 micron et inférieure à 2,0 microns, dans laquelle la taille de pore moyenne est mesurée selon la norme ASTM F-316-80, méthode B, BS6410 ;

une perméabilité à l'eau supérieure à 29 ml/min·cm$^2$·MPa (0,2 ml/min·cm$^2$ psi), dans laquelle la perméabilité à l'eau est déterminée en divisant le flux d'eau par la pression appliquée pour déterminer le débit, dans laquelle le flux d'eau est déterminé en divisant le débit (ml/min) par la surface utile de l'échantillon (cm$^2$) de la nappe de fibres ;

une turbidité de perméat inférieure à 8 NTU, dans laquelle la turbidité de perméat est déterminée par mesure avec un turbidimètre satisfaisant aux critères spécifiés dans la norme US EPA 180.1 pour les mesures de turbidité ;

un grammage entre 15 et 200 g/m$^2$, dans lequel le grammage est déterminé selon la norme ASTM D3776 ; et

une épaisseur entre 0,05 mm (0,002 pouce) et 0,5 mm (0,02 pouce), dans laquelle l'épaisseur est déterminée selon la norme ASTM D1777, et

dans laquelle la nappe de fibres est formée en stratifiant deux couches ou plus de la pluralité de fibres soufflées à l'état fondu ou formée en soumettant deux couches ou plus de la pluralité de fibres soufflées à l'état fondu à un processus de calandrage.

2. Nappe de fibres selon la revendication 1, dans laquelle la nappe de fibres a une surface spécifique supérieure à 1,5 m$^2$/g.

3. Nappe de fibres selon la revendication 1, a) dans laquelle le grammage de la nappe de fibres se situe entre 30 g/m$^2$ et 200 g/m$^2$, dans laquelle le grammage est déterminé selon la norme ASTM D3776 ; ou b) dans laquelle la nappe de fibres a une uniformité de grammage à travers la nappe de fibres inférieure ou égale à 3,0 d'écarts-types.

4. Nappe de fibres selon la revendication 1, a) dans laquelle l'épaisseur de la nappe de fibres se situe entre 0,15 mm (0,006 pouce) et 0,4 mm (0,016 pouce), dans laquelle l'épaisseur est déterminée selon la norme ASTM D1777 ; ou b) dans laquelle la nappe de fibres a une uniformité d'épaisseur à travers la nappe de fibres inférieure ou égale à 3,0 d'écarts-types.

5. Nappe de fibres selon la revendication 1, a) dans laquelle le diamètre de fibre moyen de la pluralité de fibres soufflées à l'état fondu est inférieur à 1,0 micron ; de préférence, dans laquelle le diamètre de fibre moyen de la pluralité de fibres soufflées à l'état fondu est inférieur à 0,6 micron.

6. Nappe de fibres selon la revendication 1, comprenant une solidité supérieure ou égale à 10 % et inférieure à 70 % ; de préférence, comprenant une solidité supérieure ou égale à 25 % et inférieure à 55 %, dans laquelle la solidité est le grammage/(densité apparente de fibre x épaisseur).

7. Nappe de fibres selon la revendication 1, dans laquelle la taille de pore moyenne de la nappe de fibres est supérieure à 0,2 micron et inférieure à 1,5 micron ; de préférence, dans laquelle la taille de pore moyenne de la nappe de fibres est supérieure à 0,3 micron et inférieure à 1,0 micron, dans laquelle la taille de pore moyenne est mesurée selon la norme ASTM F-316-80, méthode B, BS6410.

8. Nappe de fibres selon la revendication 1, dans laquelle la nappe de fibres a une perméabilité à l'air supérieure à 10,2 l/m$^2$/s et inférieure à 178 l/m$^2$/s (supérieure à 2 et inférieure à 35 CFM) ; de préférence, dans laquelle la perméabilité à l'air de la nappe de fibres est supérieure à 10,2 l/m$^2$/s et inférieure à 127 l/m$^2$/s (supérieure à 2 et inférieure à 25 CFM), dans laquelle la perméabilité à l'air est mesurée selon la norme ASTM D737-75.

9. Nappe de fibres selon la revendication 1, a) dans laquelle la perméabilité à l'eau de la nappe de fibres est supérieure à 29 ml/min·cm$^2$·MPa (0,2 ml/min·cm$^2$ psi) et inférieure à 590 ml/min·cm$^2$·MPa (4 ml/min·cm$^2$ psi) dans laquelle la perméabilité à l'eau est déterminée en divisant le flux d'eau par la pression appliquée pour déterminer le débit, le flux d'eau étant déterminé en divisant le débit (ml/min) par la surface effective d'échantillon (cm$^2$) de la nappe de fibres ; ou b) dans laquelle la nappe de fibres a un flux de perméat initial supérieur à 5 ml/min·cm$^2$ et inférieur à 200 ml/min·cm$^2$ ; de préférence, dans laquelle le flux de perméat initial de la nappe de fibres est supérieur à 5 ml/min·cm$^2$ et inférieur à 60 ml/min·cm$^2$, dans laquelle le flux de perméat initial est déterminé en faisant passer une suspension aqueuse de silice à travers une nappe de fibres à une pression de 0,21 MPa (30 psi) jusqu'à ce que 50 ml de perméat aient été collectés et en divisant le débit de la suspension par la surface effective d'échantillon de la nappe de fibres, et le débit étant déterminé lorsque 50 ml de perméat ont été collectés.

10. Nappe de fibres selon la revendication 1, dans laquelle la turbidité de perméat de la nappe de fibres est inférieure à 5 NTU ; de préférence, dans laquelle la turbidité de perméat de la nappe de fibres est inférieure à 2,5 NTU, dans laquelle la turbidité de perméat est déterminée par mesure avec un turbidimètre qui satisfait aux critères spécifiés dans la norme US EPA 180.1 pour les mesures de turbidité.

11. Élément filtrant comprenant la nappe de fibres selon la revendication 1.

12. Procédé comprenant le passage d'un liquide à travers la nappe de fibres selon la revendication 1.

13. Nappe de fibres selon la revendication 1, dans laquelle la nappe de fibres présente un ratio du point de bulle par rapport à la taille de pore moyenne inférieur à 3:1, dans laquelle la taille de pore moyenne est mesurée selon la norme ASTM F-316-80, méthode B, BS6410 et le point de bulle étant mesuré selon la norme ASTM F-316-80, méthode B, BS6410 en utilisant un poromètre à écoulement capillaire.

FIG. 1

**EP 2 864 014 B1**

**Patent documents cited in the description**

- WO 2012150964 A1
- US 2010282682 A
- US 20090120048 A
- US 5401446 A